# EUROPEAN PATENT APPLICATION

(11) **EP 4 339 868 A1**
(43) Date of publication of application: **20.03.2024**
(21) Application number: 23187947.9
(22) Date of filing: 26.07.2023
(51) Int. Cl.: G06Q 20/20, G07G 1/00, G07G 1/14, G07G 3/00

(54) **ATTENDANT TERMINAL FOR STORES WITH MULTIPLE POINT-OF-SALE SERVICE TYPES**

(30) Priority: 16.09.2022 JP 2022148455
(71) Applicant: Toshiba Tec Kabushiki Kaisha, Shinagawa-ku Tokyo 141-8562 (JP)
(72) Inventor: Komiyama, Hikaru, 141-8562 Tokyo (JP); Nakahara, Kanako, 141-8562 Tokyo (JP)
(74) Representative: Bandpay & Greuter

(57) **Abstract**

According to an embodiment, an attendant terminal for retail stores operating multiple point-of-sale systems includes an input unit configured to receive a user designation of a first terminal type or a second terminal type, a network interface configured to connect to a transaction server tracking a status of one or more sales transactions being performed by customers on a point-of-sale service terminal of the first terminal type or a point-of-sale service terminal of the second terminal type, and a processor. The processor is configured to filter sales transaction status information based on the user designation of the first terminal type or the second terminal type, and cause a display device to display the sales transaction status information as filtered based on the user designation.

## Description

### FIELD

Embodiments described herein relate generally to an attendant terminal and a method for displaying information related to sales transactions in retail stores or the like with two or more types of point-of-sale services.

### BACKGROUND

A point-of-sale (POS) service in which a transaction process is performed by using an information communication terminal, such as a smartphone owned by a customer or a terminal provided to the customer at a store, is known as a "smartphone POS service". In similar systems, the information communication terminal may be attached to a shopping cart provided. Such a system is known as a "cart POS service".

In some cases, the terminal user/customer at the store acting as an operator of a user interface terminal may report an issue with usage of such systems, and a store clerk may thus be required to monitor the usage status of these services so that the smartphone POS services and the cart POS services can appropriately support the users having any trouble. However, when both the smartphone POS service and the cart POS service are used at the same store, the transactions processed by using different types of the terminal devices will coexist at the relevant store, and thus, the monitoring work for checking execution status of each transaction in a system becomes complicated.

Under such circumstances, it is desirable to simplify the monitoring work when different POS system/terminal types are available in the store.

To this end, an attendant terminal and a non-transitory, computer-readable medium storing program and a system according to the appended claims are provided.

### BRIEF DESCRIPTION OF THE DRAWINGS

FIG. 1 is a block diagram illustrating a schematic configuration of a transaction processing system according to an embodiment.
FIG. 2 is a block diagram of a transaction processing device
FIG. 3 is a diagram schematically illustrating a configuration of a data record included in a store database.
FIG. 4 is a diagram schematically illustrating a configuration of transaction data.
FIG. 5 is a block diagram of an attendant terminal.
FIG. 6 is a block diagram of a user terminal.
FIG. 7 is a block diagram configuration of a cart terminal.
FIG. 8 is a flowchart of aspects of a smartphone POS process.
FIG. 9 is a flowchart of aspects a smartphone POS process.
FIG. 10 is a flowchart of aspects of a smartphone POS process.
FIG. 11 is a diagram illustrating an unavailable screen.
FIG. 12 is a diagram illustrating a registration screen.
FIG. 13 is a diagram illustrating a product scan screen.
FIG. 14 is a diagram illustrating a registration confirmation screen.
FIG. 15 is a diagram illustrating a first selection screen.
FIG. 16 is a diagram illustrating a permission code scan screen.
FIG. 17 is a flowchart of a cart POS process.
FIG. 18 is a diagram illustrating a first request screen.
FIG. 19 is a diagram illustrating a second request screen.
FIG. 20 is a diagram illustrating a handover screen.
FIG. 21 is a flowchart of a confirmation support process.
FIG. 22 is a diagram illustrating a status confirmation screen.
FIG. 23 is a diagram illustrating a status confirmation screen.
FIG. 24 is a diagram illustrating a status confirmation screen.
FIG. 25 is a diagram illustrating a status confirmation screen.
FIG. 26 is a diagram illustrating a status confirmation screen.
FIG. 27 is a diagram illustrating a status confirmation screen.

### DETAILED DESCRIPTION

The present disclosure describes technological solutions for addressing short comings of existing in-store POS systems. In particular, technological improvements over existing systems related to simplifying monitoring of transaction execution status of multiple transaction when terminal devices of different types are used for a plurality of sales transactions or the like.

According to an embodiment, an information display device, such as an attendant terminal, includes an input unit configured to receive a user designation of a first terminal type or a second terminal type, a network interface configured to connect to a transaction server tracking a status of one or more sales transactions being performed by customers on a point-of-sale service terminal of the first terminal type or a point-of-sale service terminal of the second terminal type, and a processor. The processor is configured to filter sales transaction status information based on the user designation of the first terminal type or the second terminal type, and cause a display device to display the sales transaction status information as filtered based on the user designation.

An example of the embodiment will be described below with reference to the drawings.

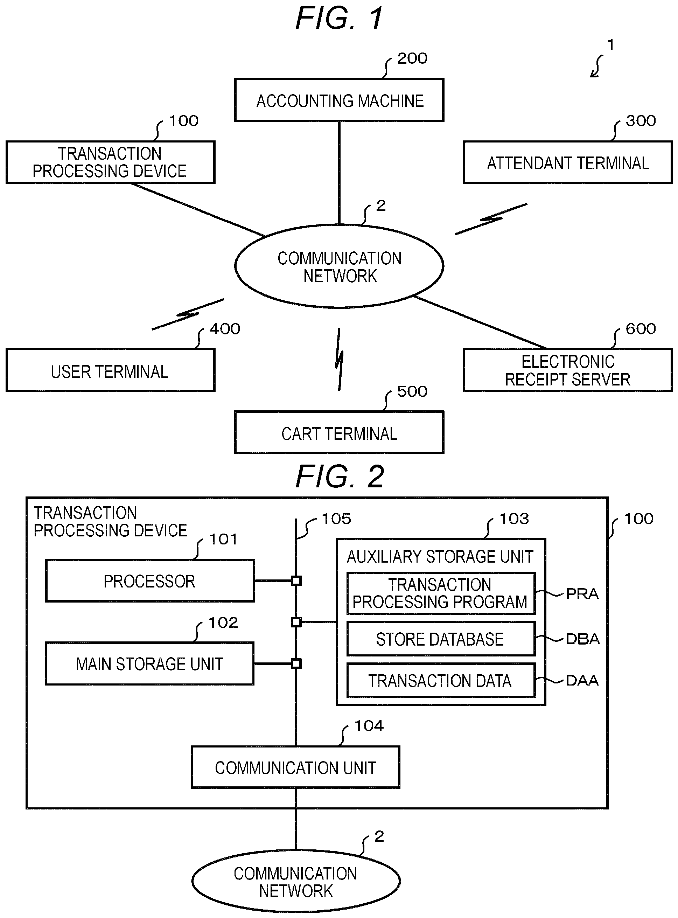

FIG. 1 is a block diagram illustrating a schematic configuration of a transaction processing system 1 according to an embodiment.

A transaction processing system 1 is configured such that a transaction processing device 100, an accounting machine 200, an attendant terminal 300, a user terminal 400, a cart terminal 500, and an electronic receipt server 600 can communicate with each other via a communication network 2.

As the communication network 2, Internet, a virtual private network (VPN), a local area network (LAN), a public communication network, a mobile communication network, or the like can be used singly or in combination as appropriate. As the communication network 2, for example, Internet and the mobile communication network are used in combination.

Note that any number of the transaction processing device 100, the accounting machine 200, the attendant terminal 300, the user terminal 400, and the cart terminal 500 may be included in the transaction processing system 1, but only one of each component is illustrated in FIG. 1.

The transaction processing device 100 is an information processing device performing an information processing for providing a transaction processing service processing a product sales transaction between the relevant user and the store according to the operations performed by the user at the store by using the accounting machine 200, the user terminal 400, and the cart terminal 500 as user interface terminals. In other words, the customer purchasing a product at the store becomes typically a user of the transaction processing service. The transaction processing device 100 is implemented as, for example, a cloud server, and provides the transaction processing service at a plurality of stores. The transaction processing device 100 may be implemented as, for example, a local server and may provide the transaction processing service at only one store. The transaction processing device 100 also has a function as the information display device for allowing the attendant terminal 300 to display the screen for the confirmation work of the execution status of the transaction.

The accounting machine 200 is installed in the store and executes a payment process related to payment for the transaction processed by the transaction processing device 100. The accounting machine 200 is operated by the operator in the payment process. In other words, the accounting machine 200 is a terminal device that receives a user operation related to the payment. The operator of the accounting machine 200 is usually the user. In some cases, a store clerk may also be the operator of the accounting machine 200.

The attendant terminal 300 is an information processing terminal operated by the store clerk. The attendant terminal 300 is a terminal device for the user interface related to the information processing for supporting the work of the store clerk related to the transactions processed by the transaction processing system 1.

The user terminal 400 is an information processing terminal owned by the user. The user terminal 400 is typically owned by the user and carried into the store by the user for use. The user terminal 400 is a terminal device operated by the user for a transaction process in the transaction processing device 100.

The cart terminal 500 is an information processing terminal attached to the shopping cart installed in the store. The cart terminal 500 is lent to the user together with the shopping cart. The cart terminal 500 is a terminal device operated by the user for the transaction process in the transaction processing device 100. The cart terminal 500 may include the information communication terminal that is lent to the user from the store and carried by the user for use.

The electronic receipt server 600 is an information processing device performing the information processing for providing an electronic receipt service to users. The electronic receipt server 600 is implemented as, for example, a cloud server and provides the electronic receipt service that enables electronic display of transactions at the plurality of stores. The transaction processing device 100 may be implemented as, for example, a local server and may provide the electronic receipt service that enables electronic display of the transaction at only one store.

FIG. 2 is a block diagram illustrating a configuration of the transaction processing device 100.

The transaction processing device 100 includes a processor 101, a main storage unit 102, an auxiliary storage unit 103, a communication unit 104, a transmission line 105, and the like. The processor 101, the main storage unit 102, the auxiliary storage unit 103, and the communication unit 104 can communicate with each other via the transmission path 105.

A computer performing the information processing for controlling the transaction processing device 100 is configured by connecting the processor 101, the main storage unit 102, and the auxiliary storage unit 103 via the transmission line 105.

The processor 101 corresponds to a core component of a computer. The processor 101 executes the information processing for controlling each component to implement various functions of the transaction processing device 100 according to an information processing program such as an operating system and an application program.

The main memory unit 102 corresponds to a main memory portion of the computer. The main storage unit 102 includes a read-only memory area and a rewritable memory area. The main storage unit 102 stores a portion of the information processing program in the read-only memory area. In some cases, the main storage unit 102 may also store the data necessary for the processor 101 to execute the process for controlling each unit in the read-only memory area or the rewritable memory area. The main storage unit 102 uses the rewritable memory area as a work area for the processor 101.

The auxiliary storage unit 103 corresponds to an auxiliary storage portion of the computer. The auxiliary memory unit 103 can use, for example, an electric erasable programmable read-only memory (EEPROM), a hard disc drive (HDD), a solid-state drive (SSD), or any other well-known memory device. The auxiliary storage unit 103 stores the data used by the processor 101 in performing various processes and the data generated by the processes in the processor 101. In some cases, the auxiliary storage unit 103 may store the information processing program. In the present embodiment, the auxiliary storage unit 103 stores a transaction processing program PRA, which is one of the information processing programs. The transaction processing program PRA is an application program describing procedures for the transaction processing to be described later. A portion of a storage area of the auxiliary storage unit 103 is used as an area for storing a store database DBA and a transaction data DAA. The store database DBA is database for managing stores that provide the transaction processing services by the transaction processing device 100. The transaction data DAA is data indicating contents of one transaction.

The communication unit 104 executes communication process for data communication via the communication network 2. As the communication unit 104, for example, an existing wired communication device for the Internet can be used. Note that, as the communication unit 104, the wireless communication device connected to the communication network 2 by wireless communication may be used instead of or in addition to the wired communication device.

The transmission line 105 includes an address bus, a data bus, a control signal line, or the like, and transmits data and control signals given and received between the connected units.

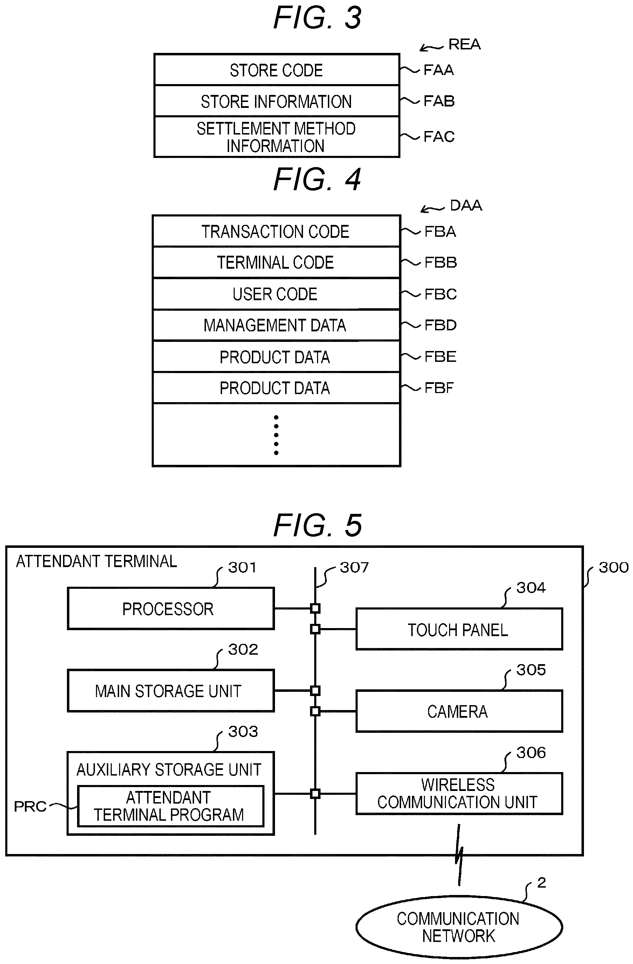

FIG. 3 is a diagram schematically illustrating a configuration of one data record REA included in the store database DBA.

The store database DBA is a set of the data records REA associated with the respective stores providing the transaction processing services by the transaction processing device 100.

The data record REA includes fields FAA, FAB, and FAC. A store code as an identifier for identifying an associated store is set in the field FAA. Various store information necessary for providing the transaction processing services at the associated store is set in the field FAB. The store information includes, for example, information indicating a time zone (also referred to as an available time range) during which use of the transaction processing service is permitted at the store. Settlement method information indicating a settlement method that is permitted to be used when an online settlement service is used to perform settlement for a price of a transaction processed by the transaction processing service at the associated store is set in the field FAC.

FIG. 4 is a diagram schematically illustrating a configuration of the transaction data DAA.

The transaction data DAA is generated for each transaction being processed by the transaction processing device 100 and stored in the auxiliary storage unit 103. Thus, in some cases, when no transaction data DAA may be stored in the auxiliary storage unit 103, a plurality of the transaction data DAA may be stored in the auxiliary storage unit 103 at the same time.

The transaction data DAA includes fields FBA, FBB, FBC, and FBD. The transaction data DAA may include greater number of fields after the field FBD, such as a field FBE. A transaction code as an identifier of the relevant transaction is set in the field FBA. A terminal code as an identifier of the user terminal 400 or the cart terminal 500 used by the user who conducts the relevant transaction is set in the field FBB. A user code as an identifier of the user who conducts the relevant transaction is set in the field FBC. A management data including various data for managing the relevant transaction is set in the field FBD. The management data includes, for example, a start time, a latest operation time, a status, an accounting machine code, a payment process code, a stop flag, and the like. The start time indicates a time when the relevant transaction is started. The latest operation time indicates a time at which the operation is performed immediately before in the user terminal 400 or the cart terminal 500 with respect to the relevant transaction. The status indicates a progress status of the relevant transaction by dividing the transaction into a plurality of items. The status includes, for example, "enter", "shopping in progress", "payment in progress", "exit", and "stop". The accounting machine code is an identifier of the accounting machine 200 used for settlement of the relevant transaction or an identifier of the used accounting machine 200. The payment process code is an identifier for identifying the payment process for the relevant transaction with the accounting machine 200. The stop flag indicates that the processing related to the relevant transaction is temporarily stopped.

When there is a registered item (hereinafter referred to as a transaction product) as in the relevant transaction, then the fields FBE, FBF, ... for each transaction product are added to the transaction data DAA. The respective product data for the different transaction products are set in the fields FBE, FBF, and subsequent fields. In this context, each item (row entry) of product data includes a product code and a quantity for the relevant transaction product. The product data may include other information such as a product name, a unit price, and discount information.

As the hardware of the transaction processing device 100, for example, a general-purpose server device can be used. Then, the transfer of the transaction processing device 100 is generally performed in a state where the transaction processing program PRA is stored in the auxiliary storage unit 103 and the store database DBA and the transaction data DAA are not stored in the auxiliary storage unit 103. However, hardware in the state where the transaction processing program PRA is not stored in the auxiliary storage unit 103 or the same type of application program of a different version is stored in the auxiliary storage unit 103 may be separately transferred regarding the transaction processing program PRA. Then, the transaction processing device 100 may be configured by writing the transaction processing program PRA in the auxiliary storage unit 103 in response to any operation of the operator. The transfer of the transaction processing program PRA can be performed by recording the transaction processing program PRA on a removable recording medium such as a magnetic disk, a magneto-optical disk, an optical disk, or a semiconductor memory, or by communication via a network.

FIG. 5 is a block diagram illustrating a configuration of the attendant terminal 300.

The attendant terminal 300 includes a processor 301, a main storage unit 302, an auxiliary storage unit 303, a touch panel 304, a camera 305, a wireless communication unit 306, a transmission line 307, and the like.

The functions of the processor 301, the main storage unit 302, the auxiliary storage unit 303, and the transmission line 307 are in essence equivalent to the already described functions of the processor 101, the main storage unit 102, the auxiliary storage unit 103, and the transmission line 105, and additional description thereof will be generally omitted. However, the auxiliary storage unit 303 stores an attendant terminal program PRC instead of the transaction processing program PRA. The attendant terminal program PRC is an application program describing a procedure of the information processing of the processor 301 for operating the attendant terminal 300 as a user interface of a store clerk who supports transactions processed by the transaction processing device 100.

The touch panel 304 displays the screen for presenting information to the operator (store clerk). The touch panel 304 inputs the instruction by a touch operation of the operator on the screen.

The camera 305 includes an optical system and an image sensor, and the image sensor generates image data indicating an image within a field of view formed by the optical system.

The wireless communication unit 306 executes communication process for data communication via the communication network 2. As the wireless communication unit 306, for example, an existing wireless communication device for wireless LAN can be used. Note that, a communication unit wired to the communication network 2 may be used instead of or in addition to the wireless communication unit 306.

As the hardware of the attendant terminal 300, for example, a tablet-type information processing device or a portable information processing device such as a smartphone can be used. A desktop computer device or the like may be used as the hardware of the attendant terminal 300 in some examples.

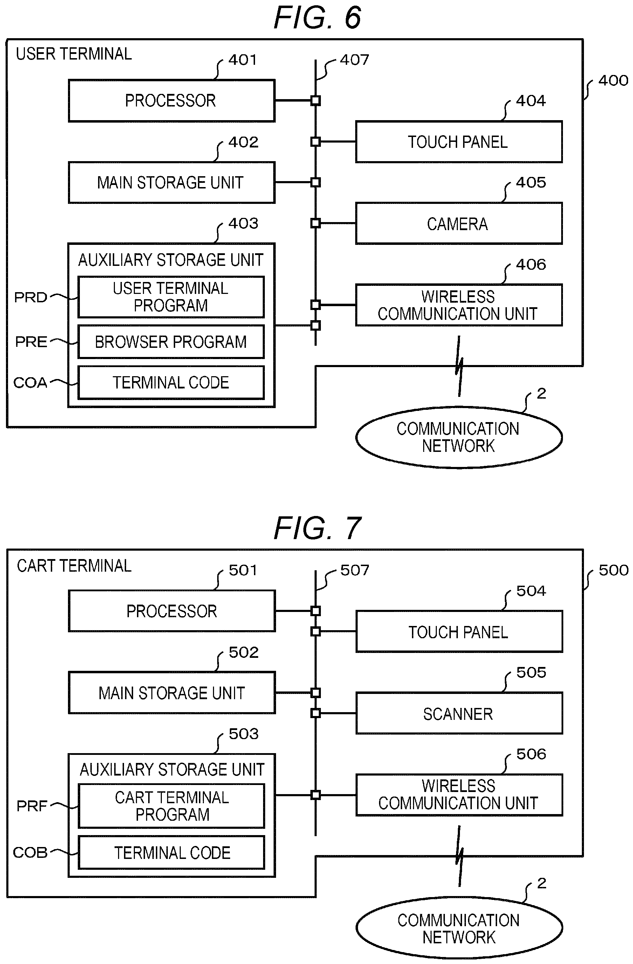

FIG. 6 is a block diagram illustrating a configuration of the user terminal 400.

The user terminal 400 includes a processor 401, a main storage unit 402, an auxiliary storage unit 403, a touch panel 404, a camera 405, a wireless communication unit 406, a transmission line 407, and the like.

The functions of the processor 401, the main storage unit 402, the auxiliary storage unit 403, and the transmission line 407 are roughly equivalent to the functions of the processor 101, the main storage unit 102, the auxiliary storage unit 103, and the transmission line 105. The functions of the touch panel 404, the camera 405, and the wireless communication unit 406 are roughly the same as the functions of the touch panel 304, the camera 305, and the wireless communication unit 306.

However, the auxiliary storage unit 403 stores a user terminal program PRD instead of the transaction processing program PRA. The user terminal program PRD is an application program describing the procedure of the information processing of the processor 401 for operating the user terminal 400 as the user interface for the transaction process by the transaction processing device 100. The auxiliary storage unit 403 also stores a browser program PRE. The browser program PRE is an application program describing the procedure of the information processing for web browsing via the communication network 2. As the browser program PRE, for example, a general-purpose browser application provided as a standard in the smartphone can be used as it is. The auxiliary storage unit 403 also stores a terminal code COA for the user terminal 400. The terminal code COA is an identifier for individually identifying the user terminal 400 and the cart terminal 500. As the terminal code COA, for example, an identifier determined by an operating system (OS) of the user terminal 400 in installing the user terminal program PRD can be used. The terminal code COA is, for example, 32 digits including mixed characters of alphabets and numbers.

The wireless communication unit 406 typically includes a well-known communication device for performing data communication via mobile communication network. However, the wireless communication unit 406 may include an existing wireless communication device for wireless LAN instead of or in addition to the communication device described above.

As the basic hardware of the user terminal 400, it is assumed that, for example, smartphone hardware is used.

FIG. 7 is a block diagram illustrating a configuration of the cart terminal 500.

The cart terminal 500 includes a processor 501, a main storage unit 502, an auxiliary storage unit 503, a touch panel 504, a scanner 505, a wireless communication unit 506, a transmission line 507, and the like.

The functions of the processor 501, the main storage unit 502, the auxiliary storage unit 503, and the transmission line 507 are roughly equivalent to the functions of the processor 101, the main storage unit 102, the auxiliary storage unit 103, and the transmission line 105. The functions of the touch panel 504 and the wireless communication unit 506 are roughly equivalent to the functions of the touch panel 304 and the wireless communication unit 306.

However, the auxiliary storage unit 503 stores a cart terminal program PRF instead of the transaction processing program PRA. The cart terminal program PRF is an application program describing the procedure of the information processing of the processor 501 for operating the cart terminal 500 as the user interface for the transaction process by the transaction processing device 100. The auxiliary storage unit 503 also stores a terminal code COB for the cart terminal 500. The terminal code COB is an identifier for individually identifying the user terminal 400 and the cart terminal 500. The terminal code COB is assigned to each of the cart terminals 500 in advance by a maintenance worker or the like so that each of a plurality of the cart terminals 500 used in the same store can be individually identified, and written in the auxiliary storage unit 503 while not overlapping with the terminal code of the user terminal 400. As the terminal code COB, for example, a numerical value from "1" to "999" is used.

The wireless communication unit 506 also typically includes an existing wireless communication device for a wireless LAN. However, the wireless communication unit 506 may include a well-known communication device for performing data communication via the mobile communication network instead of or in addition to the communication device described above.

The scanner 505 optically scans a one-dimensional barcode, a two-dimensional barcode, and the like.

As the basic hardware of the cart terminal 500, for example, it is assumed that the hardware of the tablet-type information processing device is used. Then, as the scanner 505, the configuration is assumed in which the unit configured as a separate unit from the information processing device is externally attached to the information processing device. However, the cart terminal 500 may be configured by using the camera built in the information processing device, as an imaging device of the scanner 505.

Next, the operation of the transaction processing system 1 will be described. Note that the contents of the various processes described below are only examples, and it is possible to change the order of some of the processes, omit some of the processes, or add other processes as appropriate. In the following description, the description of some associated processes will be omitted to facilitate understanding of the characteristic operation of the present embodiment in comparison to existing systems. For example, when some error occurs, there are cases in which a process of coping with such an error would be performed, but specific description for handling such errors and the processing related thereto may be omitted.

The service provided to the user by the transaction processing system 1 is called a smartphone POS service when the user uses the user terminal 400 and is called a cart POS service when the user uses the cart terminal 500.

To use the smartphone POS service, the user installs the user terminal program PRD on the information processing device such as a smartphone owned by the user and this allows the smartphone to be available as a user terminal 400 in a store the provides the smartphone POS service. The user carries the user terminal 400 around the store while the user terminal program PRD is executing on the processor 401.

For the stores providing the smartphone POS services, the check-in codes indicating the check-in data are posted at the entrance of the store or inside the store. The check-in code is, for example, the two-dimensional barcode. The check-in data includes at least the store code. Therefore, the check-in code differs for each store.

The user operates the user terminal 400 to allow the camera 405 of the user terminal 400 to image the check-in code posted at the store to be used. In response, the processor 401 of the user terminal 400 transmits the check-in data indicated by the check-in code imaged by the camera 405 together with the terminal code COA of the user terminal 400 from the wireless communication unit 406 to the communication network 2 addressed to the transaction processing device 100.

On the other hand, to use the electronic receipt service provided by the electronic receipt server 600, the user performs the usage registration and receives issuing of the user code. Then, when the user wants to use the online settlement service for the settlement related to the transactions by using the smartphone POS service, the user performs cooperation of the user code of the electronic receipt service as the usage setting of the user terminal program PRD. Through the cooperation, the user code is stored in the main storage unit 402 or the auxiliary storage unit 403 of the user terminal 400 in the state accessible by the processor 401 in the user terminal process. Then, when the processor 401 transmits the check-in data to the transaction processing device 100 as described above, the processor 401 also transmits the relevant user code when the user code is stored as described above.

When the check-in data is transmitted to the transaction processing device 100 via the communication network 2, the communication unit 104 of the transaction processing device 100 receives the relevant check-in data and temporarily stores the check-in data in the main storage unit 102 or the auxiliary storage unit 103.

As such, when the check-in data transmitted from the user terminal 400 is received by the transaction processing device 100, the processor 101 starts the transaction process (hereinafter referred to as a smartphone POS process) for the smartphone POS service according to the transaction processing program PRA.

The check-in procedure is just an example, and various modifications are possible. For example, after activating the user terminal program PRD, the processor 401 of the user terminal 400 may transmit the check-in data including the position information obtained by using a global positioning system (GPS) or other positioning sensors to the transaction processing device 100. Then, for example, when the transaction processing device 100 receives the position information, the transaction processing device 100 may acquire the store information of the store where the user terminal 400 transmitting the position information is located from the database indicating the store information in association with the position information and may perform a check-in process according to the store information.

When the processor 101 has already executed the smartphone POS process for the transaction as a target, related to the different user, the processor 101 starts a new smartphone POS process as a process in the thread different from the smartphone POS process. In other words, in some cases, the processor 101 may execute a plurality of the smartphone POS processes in parallel. Then, a plurality of the user terminals 400 used by the transaction processing device 100 as user interface terminals exist at the same time. However, the following description focuses only on a process of the transaction for one user. Thus, the "user terminal 400" in the following description refers to one user terminal 400 used by the user for the smartphone POS process of interest. "Transaction" in the following description refers to transaction that is a target of a process of interest.

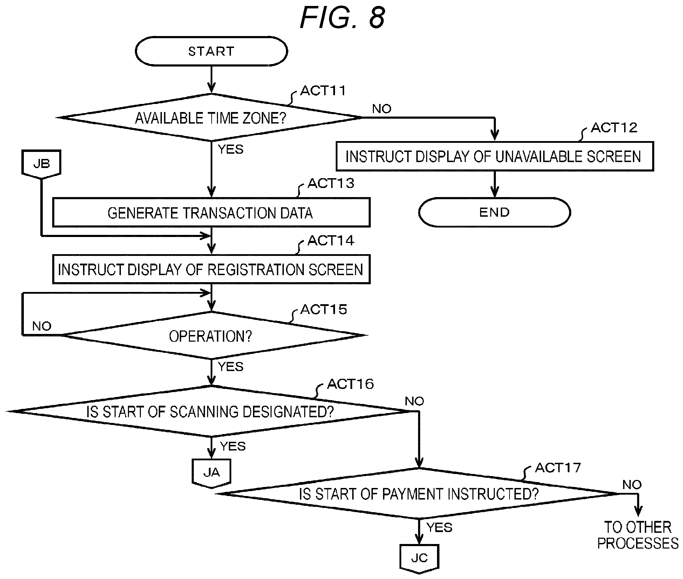

Figs. 8, 9, and 10 are flowcharts of the smartphone POS process. In the following, the case where the check-in code is read by the user terminal 400 and the store code is included in the check-in data indicated by the relevant check-in code will be described as an example.

As ACT11 in FIG. 8, the processor 101 confirms whether the current time is within the available time range (zone). That is, for example, the processor 101 searches for the data record REA in which the store code included in the received check-in data is set in the field FAA from the store database DBA and determines the available time range as indicated by the information included in the store information set in the field FAB of the relevant data record REA. Then, for example, when the current time outside the available time range, the processor 101 determines NO and proceeds to ACT12. Note that the available time range may be appropriately set for each store.

As ACT12, the processor 101 instructs the user terminal 400 to display an unavailable screen. The unavailable screen is a screen for allowing the user to recognize that the smartphone POS service cannot be used at this time. For example, the processor 101 transmits instruction data for instructing the user terminal 400 to display the unavailable screen from the communication unit 104 to the communication network 2 addressed to the user terminal 400. Then, the processor 101 ends the smartphone POS process.

When the instruction data for instructing the screen display is transmitted to the user terminal 400 via the communication network 2, the wireless communication unit 406 receives the relevant instruction data. When receiving the instruction data, the wireless communication unit 406 notifies the processor 401. When the instruction data for instructing the screen display is received, the processor 401 causes the touch panel 404 to display the screen corresponding to the instruction data by the user terminal process.

The instruction data for instructing the screen display may include screen data indicating the screen to be displayed in response to the relevant instruction data, or may not include such screen data but include data for enabling the user terminal 400 to specify the screen to be displayed. In the former case, for example, the processor 101 generates the screen data indicating the screen to be displayed on the user terminal 400 and, after that, includes the relevant screen data in the instruction data. In the latter case, the processor 101 includes, for example, a predetermined screen identifier for identifying the screen to be displayed on the user terminal 400 or a notification identifier for identifying notification becoming a trigger of the screen display in the instruction data. The notification identifier is, for example, predetermined information for identifying the notification that "the service is out of an available time range".

When the screen data is included in the received instruction data, the processor 401 of the user terminal 400 causes the touch panel 404 to display the screen indicated by the screen data as it is. When the screen identifier is included in the received instruction data, the processor 401 generates the screen identified by the screen identifier and causes the touch panel 404 to display the screen. When the notification identifier is included in the received instruction data, the processor 401 determines the screen to be displayed in response to the notification identified by the notification identifier, generates the relevant screen, and causes the touch panel 404 to display the screen.

Note that, although the contents of the screens that are targets of display are different, the giving and receiving of the display instructions for the various screens described below is performed in the same procedure as above.

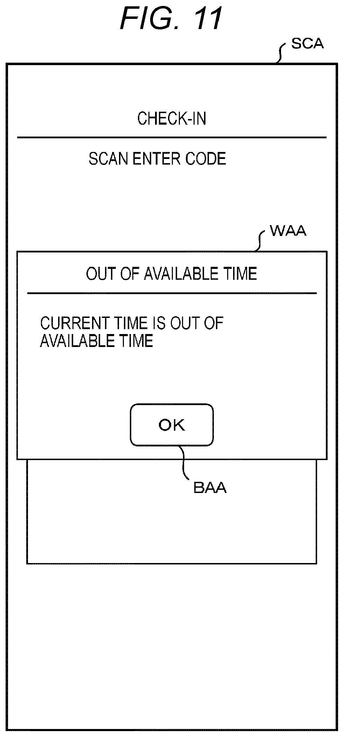

FIG. 11 is a diagram illustrating an unavailable screen SCA.

The unavailable screen SCA is a screen in which a pop-up window WAA is superimposed on a screen displayed on the touch panel 404 in a state where the check-in code is being scanned. The pop-up window WAA illustrates a text message for informing the user that the current time is out of available time and a button BAA. The button BAA is a soft key for receiving a statement by the user that guidance on the unavailable screen SCA is confirmed.

After confirming the guidance on the unavailable screen SCA, the user taps the button BAA. When such an operation is detected by the touch panel 404, the processor 401 ends the display of the unavailable screen SCA and returns the display screen of the touch panel 404 to, for example, the screen for scanning the check-in code.

On the other hand, when the current time is included in the available time range (zone), the processor 101 determines YES in ACT 11 and proceeds to ACT13.

As ACT13, the processor 101 generates new transaction data (e.g., a new transaction data entry associated with a transaction identification number or the like). That is, for example, the processor 101 may set a new transaction code different from the existing transaction codes being used for identifying other transactions according to predetermined rules, generate new transaction data DAA obtained by setting the transaction code in the field FBA and setting the transaction code received with the check-in data in the field FBB, and store the new transaction data DAA in the auxiliary storage unit 103. Note that, when the user code is received together with the check-in data, the processor 101 sets the relevant user code in the field FBC of newly generated transaction data DAA. When the user code is not received together with the check-in data, the processor 101 sets the field FBC of newly generated transaction data DAA to, for example, a null state. The processor 101 generates the management data and sets the management data in the field FBD of newly generated transaction data DAA. The processor 101 includes the current time as the start time in the management data. The processor 101 includes "enter" as the status in the management data. The processor 101 resets the stop flag included in the management data. In some cases, the processor 101 may also include various other data in the management data. What type of data to be included in the management data may be appropriately determined by, for example, a developer or the like of the transaction processing program PRA.

As ACT14 in FIG. 8, the processor 101 instructs the user terminal 400 to display the registration screen. The registration screen includes a list of products that have been already registered as transaction products and is a screen for allowing the user to recognize a registration status of the transaction products. For example, the processor 101 generates the screen data indicating the registration screen reflecting the registration status of the transaction product and causes the relevant screen data to be included in the instruction data for instructing the user terminal 400 to display the screen. As described above, the processor 101 may include the screen identifier of the registration screen or the notification identifier identifying the notification "completion of check-in confirmation" without including the screen data in the relevant instruction data. Then, the registration screen may be generated by the processor 401 in the user terminal 400.

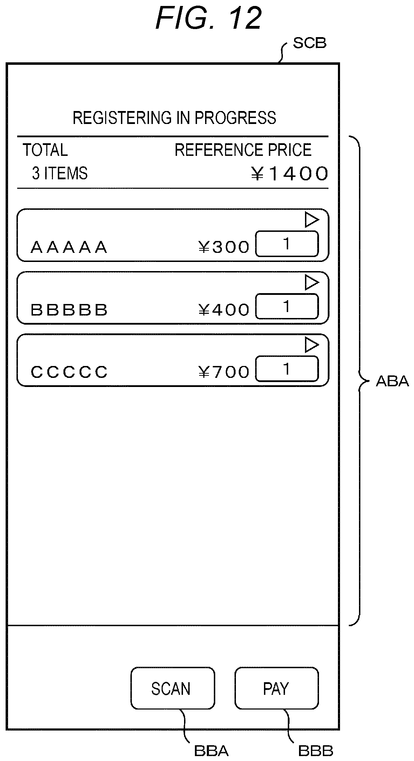

FIG. 12 is a diagram illustrating a registration screen SCB.

The image indicating the registration status is placed in the display area ABA on the registration screen SCB. The registration screen SCB illustrates buttons BBA and BBB. In the example of FIG. 12, the images placed in the display area ABA illustrate that, in the product names "AAAAA", "BBBBB", and "CCCCC", the respective unit prices are 300 yen, 400 yen, and 700 yen, the registration of a total of 3 items is completed, and the reference price is 1400 yen. Note that the reference price is an amount obtained by subtracting an amount of discounted price offered by various services such as coupon services from a sum of the unit prices of all the transaction products. The reference price becomes the settlement amount when the transaction is settled without any change in the transaction product and the applied service. Note that the images placed in the display area ABA are sequentially changed according to the registration status of the transaction product. When the processor 101 first executes ACT14 in FIG. 8, no transaction product has yet been registered. Therefore, in the registration screen SCB indicated by the screen data transmitted to the user terminal 400 by the processor 101 first executing ACT13 in FIG. 8, the images placed in the display area ABA do not indicate the information of each product and are images indicating a total of 0 items and a reference price of 0 yen.

The button BBA is a soft key for receiving the instruction to move to the state of scanning a new product. A button BBB is a soft key for receiving the designation for starting payment. Note that, in some cases, the registration screen SCB and various additional screens illustrate main display objects, and illustration of some ancillary or secondary display objects may be omitted. For example, in some cases, the image for allowing the user to image the operation that the user is to perform may be included in the screen. The registration screen SCB and various screens described later are merely examples, and the registration screen SCB and other screens may be set as appropriate by the developer or the like of the transaction processing program PRA.

When registration screen SCB is being displayed on the touch panel 404, the processor 401 waits for any operation by the user. Then, when any operation by the user is detected by the touch panel 404, the processor 401 transmits the notification data for notifying the content of the operation from the wireless communication unit 406 to the communication network 2 addressed to the transaction processing device 100. Note that all the display of various screens in response to instructions from the transaction processing device 100 and the notification of the content of the operation based on each screen are executed by the user terminal process including the processes described later.

When the notification data for notifying the content of the operation is transmitted to the transaction processing device 100 via the communication network 2, the communication unit 104 of the transaction processing device 100 receives the relevant notification data. When receiving the notification data, the communication unit 104 notifies the processor 101.

Note that the giving and receiving of the notifications of the content of the operation for the various screens described below are performed in the same procedure as above, although the contents of the operations are different. Although not specifically depicted, when receiving the notification of the contents of the operation, the processor 101 updates the transaction data DAA so that the latest operation time included in the management data set in the field FBD indicates the current time.

As ACT15 in FIG. 8, the processor 101 waits for the operation to be performed in the user terminal 400. Then, when being notified from the communication unit 104 that the notification data for notifying the content of the operation is received as described above, the processor 101 determines YES and proceeds to ACT16.

As ACT16, the processor 101 confirms whether the performed operation is an operation designating the start of scanning. When the relevant event cannot be confirmed, the processor 101 determines NO and proceeds to ACT17.

As ACT17, the processor 101 confirms whether the performed operation is an operation designating the start of payment. When the relevant event cannot be confirmed, the processor 101 determines NO, confirms the content of the operation, and proceeds to the other processes for performing a process according to the operation. As one of the other processes, for example, the processor 101 confirms whether the operation for designating the stop of the transaction has been performed and ends a registration process after executing a process for stopping the transaction. As the other processes, another process or a plurality of processes may be selectively performed, but additional description thereof will be omitted herein.

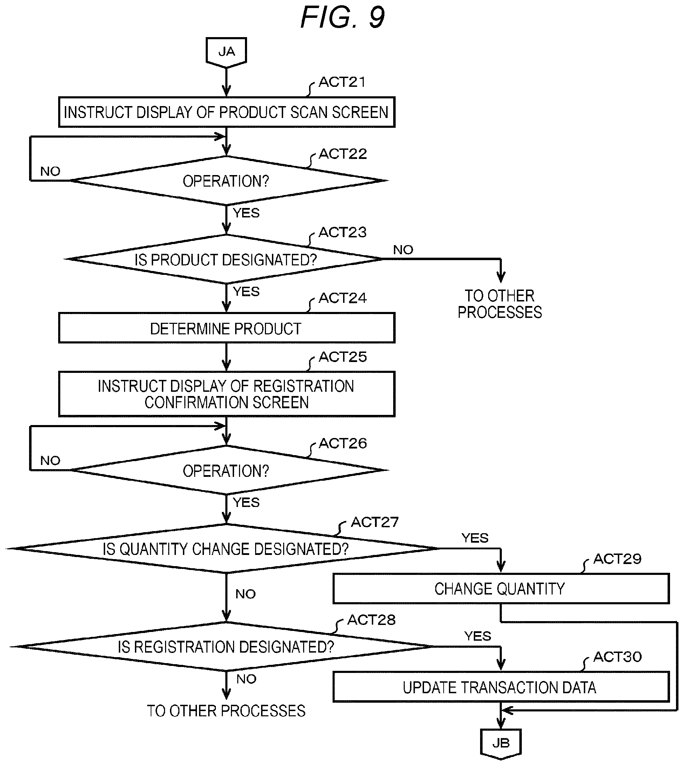

The user searches for a product as a target of the transaction in the store. When the user intends to newly registers a product as a transaction product, the user performs a predetermined operation for designating the start of scanning, such as tapping the button BBA on the registration screen SCB. When the transaction processing device 100 is notified of the operation from the user terminal 400, the processor 101 determines YES in ACT 16 and proceeds to ACT21 in FIG. 9.

As ACT21, the processor 101 instructs the user terminal 400 to display a product scan screen. The product scan screen is a screen for scanning the barcode indicating the product code.

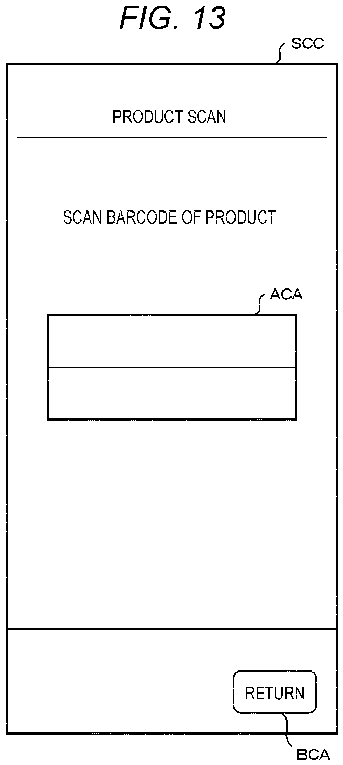

FIG. 13 is a diagram illustrating a product scan screen SCC.

The product scan screen SCC includes a display area ACA and a button BCA. The display area ACA is an area for displaying the image obtained by the camera 405. The button BCA is a soft key for the user to declare to stop scanning the product code.

When displaying the product scan screen SCC, the processor 401 of the user terminal 400 activates the camera 405 so that the image obtained by the camera 405 is superimposed and displayed in the display area ACA. Note that, when a predetermined operation for designating the start of scanning is performed, the processor 401 may generate the product scan screen without notifying the transaction processing device 100 of the operation and display the product scan screen on the touch panel 404. Here, the processor 101 of the transaction processing device 100 performs the process of ACT23 described later as ACT16, and when it is determined as YES in ACT16, the processor 101 proceeds to ACT24 described later without performing ACT21 to ACT23 described later. When any operation is performed by the user during the displaying of the product scan screen SCC, the processor 401 notifies the transaction processing device 100 of the contents of the operation described later.

When the product scan screen SCC is displayed on the touch panel 404, the user operates the user terminal 400 so that the barcode displayed on the product to be registered as a transaction product is reflected in the display area ACA. The processor 401 analyzes the image obtained by the camera 405 and attempts to read the barcode. Then, when the barcode is read, the processor 401 notifies the transaction processing device 100 that a scanning operation is performed, accompanied by the notification of data (hereinafter referred to as barcode data)indicated by the read barcode (product scan notification).

For example, when the user intends to confirm the registration status of the transaction product by temporarily cancelling the registration of the transaction product, the user performs a predetermined operation for designating the scanning stop, such as tapping the button BCA.

When the processor 101 of the transaction processing device 100 finishes instructing the display of the product scan screen as ACT21 in FIG. 9, the processor 101 proceeds to ACT22.

As ACT22, the processor 101 waits for the operation to be performed on the user terminal 400. Then, the processor 101 determines YES when the content of the operation is notified from the user terminal 400 and proceeds to ACT23.

As ACT23, the processor 101 confirms whether the operation performed is the operation for designating the product. When the relevant event cannot be confirmed, the processor 101 determines NO, confirms the content of the operation, and proceeds to the other processes for performing the process corresponding to the operation. As one of the other processes, the processor 101 confirms that the operation for designating to stop scanning, such as tapping the button BCA is performed, returns to ACT14 in FIG. 8 to return the display screen of the touch panel 404 of the user terminal 400 to the registration screen SCB. As the other processes, another process or a plurality of processes may be selectively performed, but additional description thereof will be omitted.

The processor 101 is notified of the bar code data as described above, and when the bar code data indicates the product code, and the processor 101 determines YES in ACT23 as the operation for designating the product and proceeds to ACT24.

As ACT24, the processor 101 determines the product that is to be set as a transaction product based on the notified barcode data. That is, for example, the processor 101 extracts the product code included in the barcode data and determines the product identified by the product code as the product (hereinafter referred to as a candidate product) that is to be set as a transaction product. Note that the processor 101, for example, may receive the notification from the user terminal 400 that the operation of tapping the preset button displayed on the touch panel 404 is performed and may determine the product assigned to the relevant preset button as the candidate product. The processor 101 may receive the notification from the user terminal 400 of the product code directly input on the touch panel 404 as the numeric string and may determine the product identified by that product code as the candidate product.

As ACT25, the processor 101 instructs the user terminal 400 to display a registration confirmation screen. The registration confirmation screen is a screen for confirming whether to register the candidate product as the transaction product. The processor 101 may include the screen data indicating the registration confirmation screen in the instruction data for instructing the display of the registration confirmation screen, and the registration confirmation screen may be generated by the processor 401 of the user terminal 400 including the data of the candidate product.

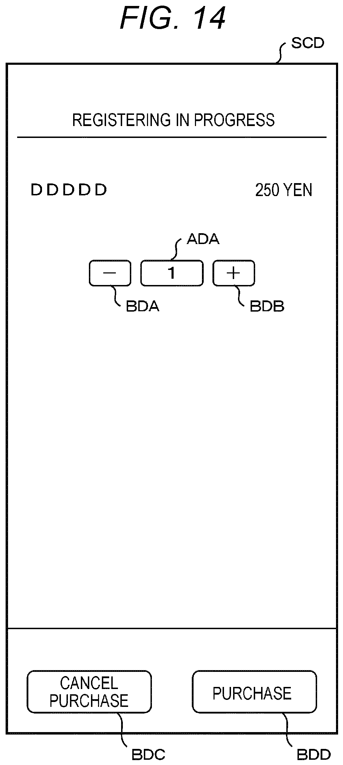

FIG. 14 is a diagram illustrating a registration confirmation screen SCD.

The registration confirmation screen SCD is an example of the candidate product with a product name of "DDDDD" and a unit price of 250 yen. The registration confirmation screen SCD illustrates the display area ADA and buttons BDA, BDB, BDC, and BDD. The display area ADA illustrates the quantity inside. The button BDA is a soft key for receiving the designation of quantity decrease. The button BDB is a soft key for receiving the designation of quantity increase. The button BDC is a soft key for receiving the designation for not being registered as a transaction product. The button BDD is a soft key for receiving the designation of registration as the transaction product.

As ACT26 in FIG. 9, the processor 101 waits for the operation to be performed on the user terminal 400. Then, when the content of the operation is notified from the user terminal 400, the processor 101 determines YES and proceeds to ACT27.

As ACT27, the processor 101 confirms whether the quantity change is designated. Then, when the relevant event cannot be confirmed, the processor 101 determines NO and proceeds to ACT28.

As ACT28, the processor 101 confirms whether designation of registering the candidate product as the transaction product is performed. Then, when the relevant event cannot be confirmed, the processor 101 determines NO, confirms the content of the operation, and proceeds to the other processes for performing a process according to the operation. As one of the other processes, the processor 101 confirms that a predetermined operation for designating the cancellation of the registration, such as tapping the button BDC, has been performed and returns to ACT21. As the other processes, another process or a plurality of processes may be selectively performed, but additional description thereof will be omitted.

When the user wants to change the quantity, the user designates the quantity change by a predetermined operation such as tapping the button BDA or the button BDB. When such an operation is notified from the user terminal 400, the processor 101 determines YES in ACT27 and proceeds to ACT29.

As ACT29, the processor 101 updates the transaction data DAA to change the quantity in response to the designation. Then, the processor 101 returns to ACT14 in FIG. 8, instructs the user terminal 400 to display the registration screen SCB corresponding to the transaction data updated as described above, and after that, returns to a waiting state of ACT 15.

When the user decides to register the candidate product displayed on the registration confirmation screen SCD as the quantity and the transaction product indicated in the display area ADA, for example, the user designates the registration by a predetermined operation such as tapping the button BDD. When such an operation is notified from the user terminal 400, the processor 101 determines YES in ACT28 and proceeds to ACT30.

As ACT30, the processor 101 registers the candidate product as the quantity displayed in the display area ADA and as the transaction product. For example, the processor 101 updates the transaction data DAA to include the product data indicating the product code of the candidate product and the quantity illustrated in the display area ADA. When the processor 101 executes ACT30 for the first time, the processor 101 changes the status included in the management data set in the field FBD of the transaction data DAA to "shopping in progress". Then, the processor 101 returns to ACT14 in FIG. 8, instructs the user terminal 400 to display the registration screen SCB corresponding to the transaction data updated as described above, and after that, returns to the waiting state of ACT 15.

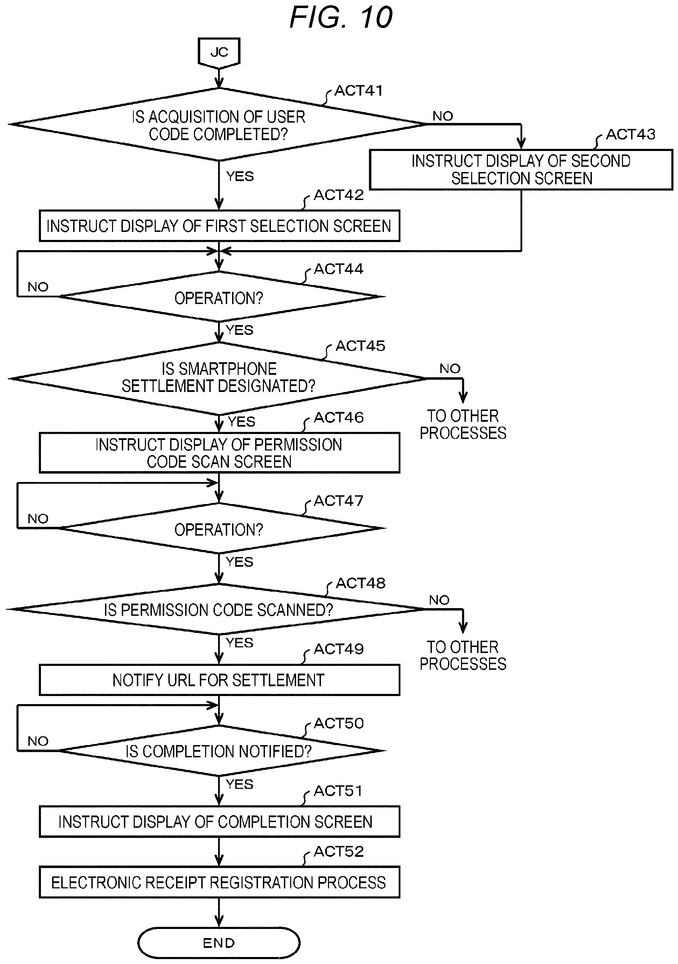

When the user has finished registering all of the transaction products related to the transaction, the user designates the start of payment by a predetermined operation such as tapping the button BBB on the registration screen SCB. When such an operation is notified from the user terminal 400, the processor 101 determines YES in ACT17 in FIG. 8 and proceeds to ACT41 in FIG. 10. The processor 101 changes the status included in the management data set in the field FBD of the transaction data DAA to "payment in progress".

As ACT41, the processor 101 confirms whether the acquisition of the user code is completed. If the processor 101 can confirm that the user code is set in the field FBC of the transaction data DAA related to the transaction, as the acquisition of the user code is completed, the processor 101 determines YES and proceeds to ACT42.

As ACT42, the processor 101 instructs the user terminal 400 to display a first selection screen. The first selection screen is a screen for allowing the user to designate which of smartphone settlement and accounting machine settlement is to be performed. Note that, when the notification identifier is included in the instruction data for instructing the display of the first selection screen, it is assumed that the relevant notification identifier is used for the notification of the requesting of any one of smartphone settlement and accounting machine settlement or the notification that the acquisition of the user code is completed.

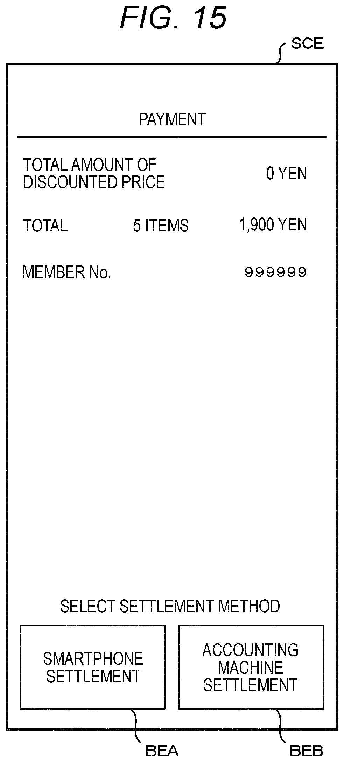

FIG. 15 is a diagram illustrating a first selection screen SCE.

The first selection screen SCE illustrates a total amount of discounted price to be applied, a total number of transaction products, a settlement amount, and a user code indicated by character strings as well as buttons BEA and BEB. The button BEA is a soft key for receiving designation of the smartphone settlement. A button BEB is a soft key for receiving the designation for the accounting machine settlement.

On the other hand, when the processor 101 confirms that the field FBC of the transaction data DAA related to the transaction is null, as the acquisition of the user code is not completed, the processor 101 determines NO in ACT41 and proceeds to ACT43.

As ACT43, the processor 101 instructs the user terminal 400 to display a second selection screen. The second selection screen is a screen for allowing the user to designate the accounting machine settlement. The second selection screen is a screen in which the first selection screen SCE is changed to allow the button BEA to be invalid, such as not displaying the button BEA or gray-out displaying the button BEA. Note that, when the notification identifier is included in the instruction data for instructing the display of the second selection screen, it is assumed that the relevant notification identifier is, for example, used as the notification of requesting the instruction to execute the accounting machine settlement or the notification of the user code of which the acquisition is not completed.

When the operation to designate the start of payment is performed, the processor 401 of the user terminal 400 may execute the processes of ACT41 to ACT43 instead of the processor 101. Here, when the processor 101 of the transaction processing device 100 determines YES in ACT17 in FIG. 8 and proceeds to ACT44 in FIG. 10.

When the user operates the user terminal 400 to perform the settlement by using the online settlement service, the user performs a predetermined operation for designating the smartphone settlement, such as tapping the button BEA displayed on the first selection screen SCE. When the user performs the settlement by using the accounting machine 200, the user performs a predetermined operation for designating the accounting machine settlement, such as tapping the button BEB displayed on the first selection screen SCE or the second selection screen.

After completing the display instruction in ACT42 or ACT43, the processor 101 proceeds to ACT44 in one of the cases.

The processor 101 as ACT44 waits for the operation to be performed on the user terminal 400. Then, the processor 101 determines YES when the transaction processing device 100 is notified of the operation from the user terminal 400 and proceeds to ACT45.

As ACT45, the processor 101 confirms whether the smartphone settlement is designated. When the relevant event cannot be confirmed, the processor 101 determines NO, confirms the content of the operation, and proceeds to the other processes for performing a process according to the operation. As one of the other processes, the processor 101 confirms that the accounting machine settlement is designated and executes the process for allowing the accounting machine 200 to perform the settlement process for the price of the transaction being processed. As the other processes, another process or a plurality of processes may be selectively performed, but additional description thereof will be omitted.

An example of the process for allowing the accounting machine 200 to perform the settlement process is as follows.

The processor 101 instructs the user terminal 400 to display the payment screen. The payment screen is a screen for handing over the payment process related to the transaction to the accounting machine 200. The payment screen displays the bar code indicating the information for the accounting machine 200 to perform the inquiry of the relevant transaction to the transaction processing device 100.

When a plurality of the accounting machines 200 are installed in the store, the user selects any unused accounting machine 200 among the accounting machines 200, and the bar code scanner provided in the accounting machine 200 reads the bar code illustrated in the payment screen. In response, the accounting machine 200 requests the payment data from the transaction processing device 100 based on the information indicated by the barcode read by the barcode scanner.

When receiving a request for the payment data, the processor 101 of the transaction processing device 100 transmits the payment data of allowing the accounting machine 200 to settle the requested transaction to the accounting machine 200 of a request source. Here, the processor 101 updates the management data set in the field FBD of the transaction data DAA to include the accounting machine code of the accounting machine 200 of the request source. The processor 101 updates the management data set in the field FBD of the transaction data DAA to include the payment process code notified from the accounting machine 200 of the request source.

As such, in response to the payment data transmitted from the transaction processing device 100, the accounting machine 200 appropriately displays the screen, receives the user operation related to the payment, and executes the payment process on the transaction based on the payment data. The process of the accounting machine 200 may be similar to the processing performed in an existing accounting machine of the POS system.

When the processor 101 of the transaction processing device 100 proceeds from ACT44 to ACT45 of FIG. 10 in response to performing the operation of designating the smartphone settlement as described above in the user terminal 400 in a state of displaying the first selection screen SCE, the processor 101 determines YES in ACT45 and proceeds to ACT46. Note that, when the processor 101 instructs to display the second selection screen in ACT43 since the user code is not acquired, the smartphone settlement is not designated, and the processor 101 does not proceed to ACT46.

As ACT46, the processor 101 instructs the user terminal 400 to display a permission code scan screen. The permission code scan screen is a screen for scanning the bar code indicating the permission code. Note that, when the notification identifier is included in the instruction data for instructing the display of the permission code scan screen, it is assumed that the relevant notification identifier identifies the notification for the requesting of the input of the permission code.

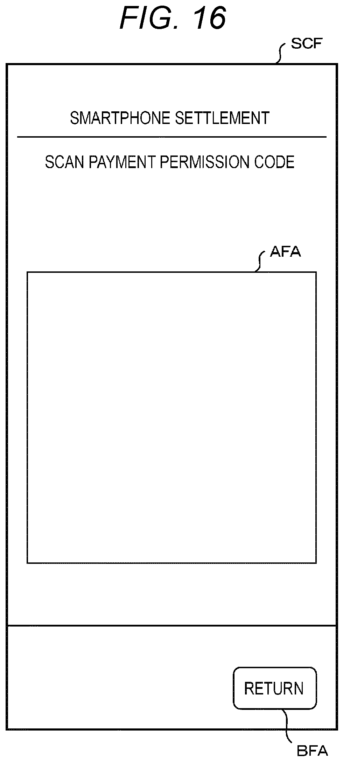

FIG. 16 is a diagram illustrating a permission code scan screen SCF.

The permission code scan screen SCF includes a display area AFA and a button BFA. The display area AFA is an area for displaying the image obtained by the camera 405. The button BFA is a soft key for the user to declare to stop the smartphone settlement.

When displaying the permission code scan screen SCF, the processor 401 of the user terminal 400 activates the camera 405 and superimposes and displays the image obtained by the camera 405 in the display area AFA.

The two-dimensional barcode indicating the permission code for permitting a predetermined smartphone settlement is posted in a predetermined payment area as a portion of the store. The display of the two-dimensional barcode can be performed by installing a signboard, posting the print materials, or the like. The payment area is an area in which the settling of the settlement by using the online settlement service is permitted. The payment area may be appropriately determined for each store by a store manager or the like. The permission code may be different for each store or may be common to the plurality of stores. A one-dimensional barcode indicating the permission code may be posted instead of a two-dimensional barcode.

After moving to the payment area, the user operates the user terminal 400 so that the two-dimensional barcode as posted above is reflected in the display area AFA. The processor 401 analyzes the image obtained by the camera 405 and attempts to read the two-dimensional barcode. Then, when the two-dimensional barcode is read, the processor 401 notifies the transaction processing device 100 that the scanning operation is performed, accompanied by the notification of the barcode data indicated by the read two-dimensional barcode. Thus, the signboard or print materials for displaying the two-dimensional bar code corresponds to a medium that is an acquisition source of the permission code by the user terminal 400.

After completing the display instruction in ACT46, the processor 101 proceeds to ACT47.

As ACT47, the processor 101 waits for the operation to be performed on the user terminal 400. Then, the processor 101 determines YES when the content of the operation is notified from the user terminal 400 and proceeds to ACT48.

As ACT48, the processor 101 confirms whether the permission code is scanned. When the relevant event cannot be confirmed, the processor 101 determines NO, confirms the content of the operation, and proceeds to the other processes for performing the process according to the content of the operation. As one of the other processes, the processor 101, for example, confirms that the operation for designating the stop of the smartphone settlement, such as tapping the button BFA, has been performed and returns to ACT42 to return the display screen of the touch panel 404 of the user terminal 400 to the first selection screen SCE. As one of the other processes, the processor 101 may confirm that a barcode not indicating the permission code has been scanned, display the error, return to ACT46 to return the display screen of the touch panel 404 of the user terminal 400 to the permission code scan screen SCF. An error display is, for example, a screen display for notifying the operator that the smartphone settlement cannot be performed unless the permission code is scanned. As other processes, another process or a plurality of processes may be selectively performed, but detailed description of such other processes will be omitted.

When the operation notification accompanied by the notification of the barcode data indicating the permission code is performed, the processor 101 determines YES in ACT48 as the permission code is scanned and proceeds to ACT49.

As ACT49, the processor 101 notifies the user terminal 400 of a uniform resource locator (URL) for settlement to perform web access to the online settlement service and settling the settlement of the transaction. The processor 101 includes, for example, the address for accessing the web server (hereinafter referred to as a settlement server) providing the online settlement service and the settlement data related to the transaction in the URL for settlement. The processor 101 can determine the settlement amount and the transaction code for the transaction from the settlement data. The processor 101 can determine an identifier of a member store of the online settlement service to which the store belongs from the settlement data. For example, the processor 101 enables the settlement server to determine the identifier for identifying the transaction processing device 100 from the settlement data. Note that what type of information the processor 101 can determine from the settlement data conforms to specifications of the online settlement service. A portion of the information to be included in the settlement data may be transmitted from the user terminal 400 or the transaction processing device 100 to the settlement server by separate communication without being included in the settlement data.

When the processor 401 of the user terminal 400 receives the notification of the URL for settlement through the user terminal process, the processor 401 activates the browser process according to the browser program PRE provided in the user terminal 400 and hands over the URL for settlement notified from the transaction processing device 100 to the browser process.

The processor 401 accesses the settlement server based on the URL for settlement handed over from the user terminal process in the browser process. Next, the processor 401 performs the settlement by using the online settlement service in response to the instruction from the settlement server and the operation by the user in the browser process. Note that the procedure for the settlement by using the online settlement service may be one known for online settlement services, and the additional description thereof will be omitted.

When the settlement is completed, the settlement server notifies the transaction processing device 100 identified by the identifier determined from the settlement data included in the URL for settlement used for access of the completion of settlement, accompanied by the notification of the transaction identifier determined from the URL for settlement.

The processor 101 of the transaction processing device 100 proceeds to ACT50 after notifying the URL for settlement as ACT49 in FIG. 10.

As ACT50, the processor 101 waits for the completion notification. Then, the processor 101 determines YES when the completion of the settlement is notified from the settlement server as described above and proceeds to ACT51.

As ACT51, the processor 101 instructs the user terminal 400 to display the completion screen. The completion screen is a screen for allowing the user to recognize that the transaction is completed. When the notification identifier is included in the instruction data for instructing the display of the completion screen, it is assumed that the relevant notification identifier identifies the notification that the settlement is completed. The processor 101 changes the status included in the management data set in the field FBD of the transaction data DAA to "exit".

As ACT52, the processor 101 performs an electronic receipt registration process. In other words, the processor 101 transmits various data such as a user code, a list of transaction products, and a settlement result to the electronic receipt server 600 to enable the content of the current transaction to be displayed by the electronic receipt service. Then, the electronic receipt server 600 stores the acquired data in the transaction database and enables the contents of the transaction to be displayed by the electronic receipt service. The electronic receipt registration process may be the same as the process performed by an existing electronic receipt service, and the additional description thereof will be omitted. The data transmitted by the processor 101 to the electronic receipt server 600 conforms as necessary to the specifications of the electronic receipt service.

Then, the processor 101 ends the smartphone POS process.

To use the cart POS service, the user performs a predetermined operation to start using the unused cart terminal 500. The user can also perform the operation for inputting the user code into the cart terminal 500 as a portion of the operation for starting use. The processor 501 of the cart terminal 500 having received such an operation transmits the check-in data together with the terminal code COB of the cart terminal 500 to the transaction processing device 100 from the wireless communication unit 506 to the communication network 2. When the user code is entered, the processor 501 also transmits the entered user code together with the check-in data. The same check-in data as, for example, the check-in code is written in the auxiliary storage unit 503 in advance. However, the check-in data written in the auxiliary storage unit 503 may partially differ from the check-in data indicated by the check-in code.

When the check-in data is transmitted to the transaction processing device 100 via the communication network 2, the communication unit 104 of the transaction processing device 100 receives the relevant check-in data and temporarily stores the check-in data in the main storage unit 102 or the auxiliary storage unit 103.

When the check-in data transmitted from the cart terminal 500 is received by the transaction processing device 100 as such, the processor 101 starts the transaction process (hereinafter referred to as a cart POS process) for the cart POS service according to the transaction processing program PRA. Note that the smartphone POS process and the cart POS process may be described in separate application programs.

When the processor 101 has already executed the cart POS process for the transaction as a target, related to the different user, the processor 101 starts a new cart POS process as a process in the thread different from the cart POS process. When the processor 101 has already executed the smartphone POS process described above, the processor 101 starts the cart POS process as a process in the thread different from the smartphone POS process. In other words, the processor 101 may execute a plurality of the smartphone POS processes and the cart POS processes in parallel. However, the following description focuses only on the processes of the transactions for the single user. Thus, the "cart terminal 500" in the following description refers to one cart terminal 500 used by the user for the cart POS process of interest. The "transaction" in the following description refers to the transaction that is a target of the process of interest.

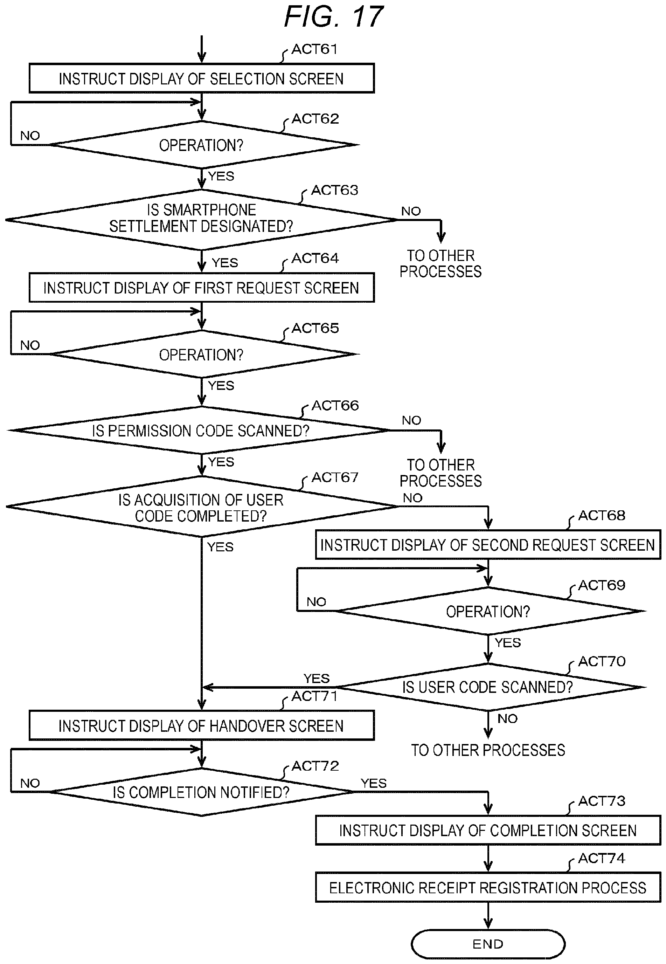

FIG. 17 is a flowchart of the cart POS process.

The processor 101 performs each process illustrated in FIGS. 8 and 9 in the smartphone POS process in the cart POS process, similarly. However, a terminal used as the user interface is the cart terminal 500 in the cart POS process. Various screens displayed on the touch panel 504 of the cart terminal 500 may be changed for the cart terminal 500. For example, when the cart terminal 500 is attached to the shopping cart with the touch panel 504 in a horizontally oriented state, various vertically oriented screens described above are changed to adapt to a horizontal orientation. For example, when the screen size of the touch panel 504 is larger than the screen size of the touch panel 404, the screen is changed so that more information than the various screens described above is displayed on one screen. However, the functions described above for the various screens are not changed.

The processor 101 proceeds to ACT61 in FIG. 17 in response to the notification from the cart terminal 500 that the operation for instructing the start of payment is performed.

As ACT61, the processor 101 instructs the cart terminal 500 to display the selection screen. Similarly to the first selection screen, the selection screen is a screen for allowing the user to designate which of the smartphone settlement and the accounting machine settlement is to be performed.

When the instruction data for instructing the display of the selection screen is received by the wireless communication unit 506, the processor 501 of the cart terminal 500 causes the touch panel 504 to display the selection screen. However, the processor 401 may display the selection screen on the touch panel 404 without receiving the display instruction from the processor 101. Here, the processor 101 may omit ACT61 and proceed to ACT62.

When the user performs the settlement by using the online settlement service, for example, the user performs a predetermined operation for designating the smartphone settlement, such as tapping the button displayed for designating the smartphone settlement on the selection screen. When the user performs the settlement by using the accounting machine 200, the user may perform a predetermined operation for designating the accounting machine settlement, such as tapping the button displayed on the selection screen for designating the accounting machine settlement.

The processor 101 as ACT62 waits for the operation to be performed on the cart terminal 500. Then, when the transaction processing device 100 is notified of the operation from the cart terminal 500, the processor 101 determines YES and proceeds to ACT63.

As ACT63, the processor 101 confirms whether the smartphone settlement is designated. When the relevant event cannot be confirmed, the processor 101 determines NO, confirms the content of the operation, and proceeds to the other processes for performing a process according to the operation. As one of the other processes, the processor 101 confirms that the accounting machine settlement is designated and executes a process for allowing the accounting machine 200 to perform the settlement process for the price of the transaction being processed. As the other processes, another process or a plurality of processes may be selectively performed, but additional description thereof will be omitted.

When the processor 101 of the transaction processing device 100 proceeds from ACT62 to ACT63 in response to the operation of designating the smartphone settlement in the cart terminal 500, the processor 101 determines YES in ACT63 and proceeds to ACT64.

As ACT64, the processor 101 instructs the cart terminal 500 to display the first request screen. The first request screen is a screen for requesting the user to allow the cart terminal 500 to scan the permission code. When the notification identifier is included in the instruction data for instructing the display of the first request screen, it is assumed that the relevant notification identifier identifies the notification for the requesting of the input of the permission code.

Note that, when the operation to designate the smartphone settlement is performed on the selection screen, the processor 501 of the cart terminal 500 may allow the touch panel 504 to display the first request screen without receiving the display instruction from the transaction processing device 100. Here, the processor 101 of the transaction processing device 100 does not execute ACT64.

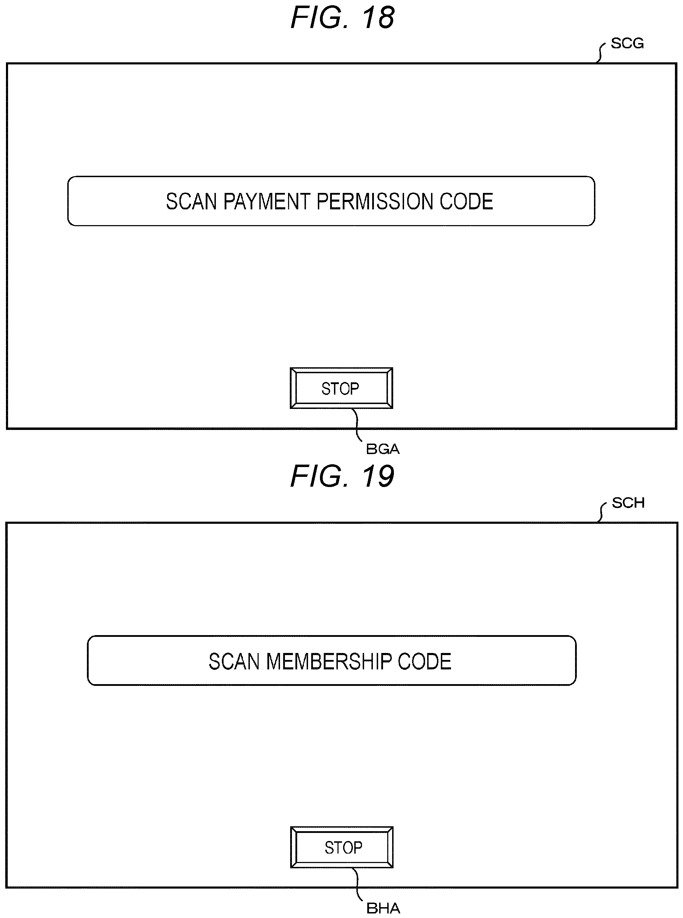

FIG. 18 is a diagram illustrating a first request screen SCG.

The first request screen SCG illustrates the text message for requesting the user to allow the cart terminal 500 to scan the permission code. The first request screen SCG illustrates the button BGA. The button BGA is a soft key for receiving the instruction to stop the smartphone settlement.

The user operates the cart terminal 500 so that the scanner 505 reads the permission code posted in the payment area. When the two-dimensional barcode is read with the scanner 505, the processor 501 notifies the transaction processing device 100 that the scanning operation is performed, accompanied by the notification of barcode data indicated by the two-dimensional barcode.

After completing the display instruction in ACT64 in FIG. 17, the processor 101 proceeds to ACT65.

As ACT65, the processor 101 waits for the operation to be performed on the cart terminal 500. Then, when the content of the operation is notified from the cart terminal 500, the processor 101 determines YES and proceeds to ACT66.

As ACT66, the processor 101 confirms whether the permission code is scanned. Then, when the relevant event cannot be confirmed, the processor 101 determines NO, confirms the content of the operation, and proceeds to the other processes for performing the process according to the operation. As one of the other processes, for example, the processor 101 confirms that the operation for designating the stop of the smartphone settlement, such as tapping the button BGA is performed, returns to ACT61, and returns the display screen of the touch panel 504 of the cart terminal 500 to the selection screen. As one of the other processes, for example, the processor 101 confirms that the barcode not indicating the permission code is scanned, and after displaying the error, returns to the ACT64 to return the display screen of the touch panel 504 of the cart terminal 500 to the first request screen SCG. The error display is, for example, a screen display for notifying the operator that the smartphone settlement cannot be performed unless the permission code is scanned. As the other processes, another process or a plurality of processes may be selectively performed, but additional description thereof will be omitted.

When the operation notification accompanied by the notification of the bar code data indicating the permission code is performed, as the permission code is scanned, the processor 101 determines YES in ACT66 and proceeds to ACT68.

As ACT67, the processor 101 confirms whether the acquisition of the user code is completed. As a portion of the operation for starting the use of the cart terminal 500, since the user code is not transmitted from the cart terminal 500 together with the check-in data without inputting the user code into the cart terminal 500, when the data is not acquired, the processor 101 determines NO and proceeds to ACT68.

As ACT68, the processor 101 instructs the cart terminal 500 to display the second request screen. The second request screen is a screen for requesting the user to allow the cart terminal 500 to scan the user code. When the notification identifier is included in the instruction data for instructing the display of the second request screen, it is assumed that the relevant notification identifier identifies the notification for the requesting of the input of the user code.

FIG. 19 is a diagram illustrating a second request screen SCH.

The second request screen SCH illustrates the text message for requesting the user to allow the cart terminal 500 to scan the user code. Note that, in the relevant text message, the user code is indicated as "membership code". The second request screen SCH also illustrates the button BHA. The button BHA is a soft key for receiving the instruction to stop the smartphone settlement.

For example, the user causes the barcode indicating the user code to be displayed on the screen of the information communication terminal such as a smartphone owned by the relevant user and causes the scanner 505 of the cart terminal 500 to scan the barcode. When the barcode is read with the scanner 505, the processor 501 notifies the transaction processing device 100 that the scanning operation is performed, accompanied by the notification of the barcode data indicated by the barcode.

When the display instruction in ACT68 in FIG. 17 is completed, the processor 101 proceeds to ACT69.

As ACT69, the processor 101 waits for the operation to be performed on the cart terminal 500. When the content of the operation is notified from the cart terminal 500, the processor 101 determines YES and proceeds to ACT70.

As ACT70, the processor 101 confirms whether the user code is scanned. When the relevant event cannot be confirmed, the processor 101 determines NO, confirms the content of the operation, and proceeds to the other processes for performing a process according to the operation. As one of the other processes, for example, the processor 101 confirms that the operation for designating the stop of the smartphone settlement, such as tapping the button BHA, is performed, and returns to ACT61 to return the display screen of the touch panel 504 of the cart terminal 500 to the selection screen. As one of the other processes, for example, the processor 101 confirms that the barcode not indicating the user code is scanned, and after displaying the error to notify that the scanned barcode is incorrect, the processor 101 returns to ACT68 to return the display screen of the touch panel 504 of the cart terminal 500 to the second request screen SCH. As the other processes, another process or a plurality of processes may be selectively performed, but additional description thereof will be omitted.

When the operation notification accompanied by the notification of the barcode data indicating the user code is performed, as the user code is scanned, the processor 101 determines YES in ACT70 and proceeds to ACT71. Note that, when the processor 101 confirms whether the acquisition of the user code is completed and determines YES in ACT67, the processor 101 proceeds to ACT71 without performing ACT68 to ACT70.

As ACT71, the processor 101 instructs the cart terminal 500 to display the handover screen. The handover screen is a screen for handing over the settlement by using the online settlement service to another information communication terminal. A smartphone is typically used as the relevant other information communication terminal.

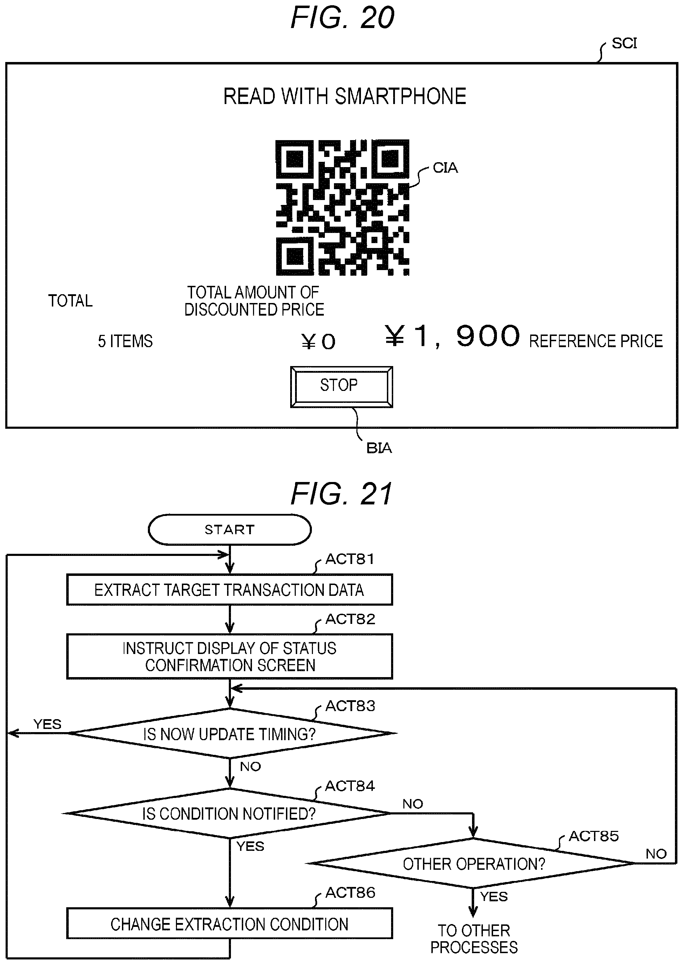

FIG. 20 is a diagram illustrating the handover screen SCI.

The handover screen SCI illustrates the total amount of discounted price to be applied, the total number of transaction products, the settlement amount, and the user code indicated by character strings, as well as a two-dimensional barcode CIA and a button BIA. The handover screen SCI illustrates a text message for requesting the user to read the two-dimensional bar code CIA with the information communication terminal used for settlement. The two-dimensional barcode CIA indicates the handover data including the URL for settlement and a command requesting the execution of the web access by using the relevant URL for settlement. The button BIA is a soft key for receiving the instruction to stop the smartphone settlement. For example, the processor 101 generates the URL for settlement in the same manner as the URL for settlement notified to the user terminal 400 in ACT49 in FIG. 10.

For example, the user causes the information communication terminal to read the two-dimensional barcode CIA by using the barcode reader function of the information communication terminal such as a smartphone owned by the relevant user. In response, the information communication terminal accesses the settlement server based on the URL for settlement included in the handover data indicated by the two-dimensional barcode CIA by using the browser function. Next, the information communication terminal performs the settlement by using the online settlement service in accordance with the instruction from the settlement server and the operation by the user in the browser function. Note that the procedure for settlement by using the online settlement service may be one known for existing online settlement services, and additional description thereof will be omitted.

After performing the display instruction as ACT71 in FIG. 17, the processor 101 of the transaction processing device 100 proceeds to ACT72.

As ACT72, the processor 101 waits for the completion notification. When the processor 101 is notified of the completion of the settlement as described above from the settlement server, the processor 101 determines YES and proceeds to ACT73.

As ACT73, the processor 101 instructs the cart terminal 500 to display the completion screen. The completion screen is a screen for allowing the user to recognize that the transaction is completed. When the notification identifier is included in the instruction data for instructing the display of the completion screen, it is assumed that the relevant notification identifier identifies the notification that the settlement is completed. The processor 101 changes the status included in the management data set in the field FBD of the transaction data DAA to "exit".

As ACT74, the processor 101 performs the electronic receipt registration process in the same manner as ACT52 in FIG. 10.

Then, the processor 101 ends the cart POS process.

Next, the operation for enabling the attendant terminal 300 to perform the monitoring of the execution status of each transaction will be described.

The processor 101 starts the confirmation support process according to the transaction processing program PRA as a process in the thread different from the smartphone POS process and the cart POS process described above. Note that the confirmation support process may be written in the application program different from the transaction processing program PRA.

FIG. 21 is a flowchart of the confirmation support process.

As ACT81, the processor 101 extracts the transaction data (hereinafter referred to as target transaction data) related to the transaction as a target of presentation on the status confirmation screen described later from among the transaction data stored in the auxiliary storage unit 103.

When the processor 101 first executes ACT81 after starting the confirmation support process, the processor 101 extracts the target transaction data according to the default extraction conditions. In the present embodiment, the extraction conditions are as follows. However, the extraction conditions may be appropriately determined by, for example, the developer or the like of the transaction processing program PRA.

The setting items for the extraction conditions include "number of display", "status", "terminal type", and "terminal ID". For a setting item "number of display", "display all", "10 minutes ago", and "30 minutes ago" as targets can be selectively set, and setting for "display all" as a target is default. For a setting item "status", at least one of "enter", "shopping in progress", "payment in progress", "exit", and "stop" as targets can be set, and setting for all of "enter", "shopping in progress", "payment in progress", "exit", and "stop" as targets is default. For a setting item "terminal type", at least one of "smartphone" and "tablet" as a target can be set, and setting for both "smartphone" and "tablet" as targets is default. For a setting item "terminal ID", any character string corresponding to at least a portion of the terminal code as a key can be set, and the relevant key can be set as a non-default key.

As ACT82, the processor 101 instructs the attendant terminal 300 to display the status confirmation screen. The status confirmation screen is a screen for allowing the store clerk to check the execution status of the transaction by using the attendant terminal 300. For example, the processor 101 generates the screen data indicating the status confirmation screen and transmits the instruction data for instructing the screen display based on the screen data from the communication unit 104 to the communication network 2 addressed to the attendant terminal 300.

When the instruction data for instructing the screen display is transmitted to the attendant terminal 300 via the communication network 2, the wireless communication unit 306 of the attendant terminal 300 receives the relevant instruction data. When receiving the instruction data, the wireless communication unit 306 notifies the processor 301. When the instruction data for instructing the screen display is received, the processor 301 causes the touch panel 304 to display the screen corresponding to the instruction data according to the attendant terminal program PRC.

Note that, although the contents of the screen data are different, the giving and receiving of the display instructions for the various screens described below are performed with the same procedure as above.

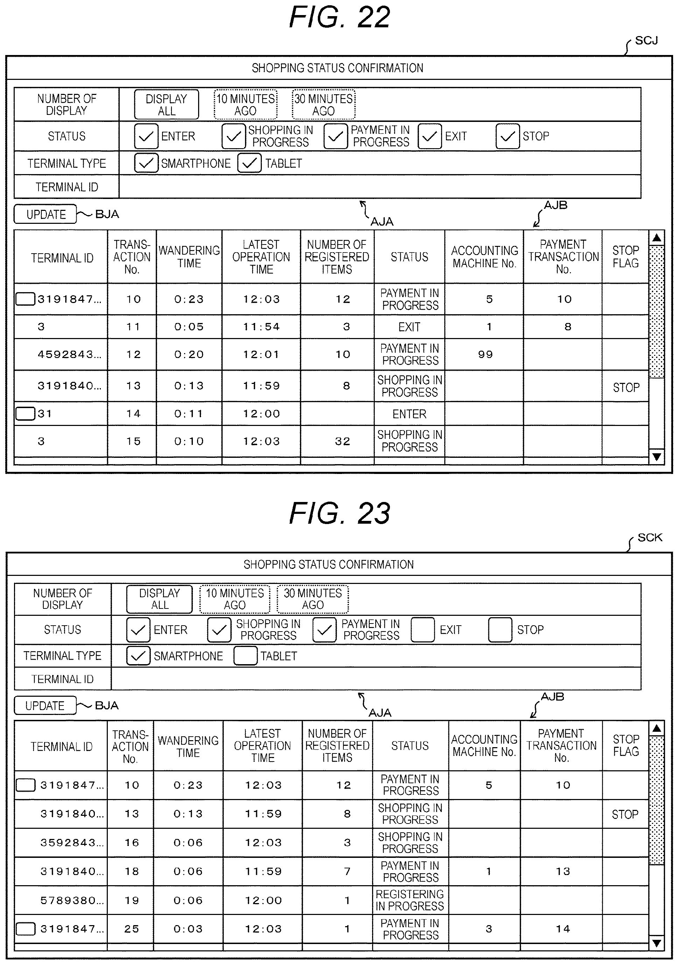

FIG. 22 is a diagram illustrating the status confirmation screen SCJ as an example.

The status confirmation screen SCJ illustrates display areas AJA and AJB and a button BJA. The display area AJA indicates the setting status of the extraction conditions. The display area AJB indicates the execution status of the transaction related to the target transaction data extracted by the processor 101 in ACT81 in FIG. 21. The button BJA is a soft key for receiving the instruction to update the conditions for narrowing down (filtering).

The display area AJA in the status confirmation screen SCJ corresponds to a case where all settings of all setting items are the defaults described above. In other words, it is illustrated that, among the three radio buttons indicated in association with the setting item "number of display", the radio button associated with "display all" is turned on, and the radio buttons respectively associated with "10 minutes ago" and "30 minutes ago" are turned off, so that, for the setting item "number of display", the target "display all" is set. For a setting item "status", check marks of all five check boxes associated with "enter", "shopping in progress", "payment in progress", "exit", and "stop", relatively, are indicated, and it is illustrated that all of "enter", "shopping in progress", "payment in progress", "exit", and "stop" are set as targets. For a setting item "terminal type", check marks of two check boxes associated with "smartphone" and "tablet" are indicated, and it is illustrated that "smartphone" and "tablet" are set as targets. For a setting item "terminal ID", the associated input field is blank, and it is illustrated that no key is set.

The display area AJB indicates a list of the execution statuses of the transaction corresponding to the respective target transaction data. In the list displayed in the display area AJB, one line relates to one transaction and indicates information about the items "terminal ID", "transaction No.", "wandering time", "latest operation time", "number of registered items", "status", "accounting machine No.", "accounting machine transaction No.", and "stop flag". The information in the item "terminal ID" indicates the terminal code set in the field FBB of the target transaction data. Note that, when the user code is set in the field FBC of the target transaction data, a mark indicating such can be displayed in a left horizontal portion of the terminal code. The information in the item "transaction No." indicates the transaction code set in the field FBA of the target transaction data. The information in the item "wandering time" indicates the elapsed time from the start time to the current time included in the management data set in the field FBD of the target transaction data. The information of the item "latest operation time" indicates the latest operation time included in the management data set in the field FBD of the target transaction data. The information in the item "number of registered items" indicates a total sum of the quantities included in each product data set in each field after the field FBE of the target transaction data. The information in the item "status" indicates information included as the status in the management data set in the field FBD of the target transaction data. The information of the item "the accounting machine No." indicates the accounting machine code when the management data set in the field FBD of the target transaction data includes the relevant accounting machine code. The information in the item "payment transaction No." indicates the payment process code when the management data set in the field FBD of the target transaction data includes the relevant payment process code. The information of the item "stop flag" indicates the state (value) of the stop flag included in the management data set in the field FBD of the target transaction data.

Note that, in the example of FIG. 22, since the number of digits that can be displayed for the item "terminal ID" is limited to 7 digits, the entire 32-digit terminal code cannot be displayed, and the processor 301 displays only the upper 7 digits. When one of the pieces of information indicated by the item "terminal ID" in the display area AJB is designated by a predetermined operation such as tapping, if the relevant information indicates only a portion of the terminal code, the processor 301 displays all of the relevant terminal codes.

As ACT83, the processor 101 confirms whether now is update timing of the status confirmation screen. Then, when the relevant event cannot be confirmed, the processor 101 determines NO and proceeds to ACT84.

As ACT84, the processor 101 confirms whether the notification of the extraction conditions is performed by the attendant terminal 300. Then, when the relevant event cannot be confirmed, the processor 101 determines NO and proceeds to ACT85.

As ACT85, the processor 101 confirms whether an operation other than the operation for changing the extraction conditions is performed in the attendant terminal 300. Then, when the relevant event cannot be confirmed, the processor 101 determines NO and returns to ACT83.

Thus, the processor 101 waits for the update timing to come, for the notification of the extraction conditions or other operations to be performed in ACT83 to ACT85.

When a predetermined timing as the update timing comes, the processor 101 determines YES in ACT83, and repeats ACT81 and subsequent ACTs. Here, although the transaction data newly extracted as the target transaction data in ACT81 is similar to the transaction data extracted in ACT81 last time, when the contents of the target transaction data is changed due to the progress of the transaction, the information displayed in the display area AJB on the displayed status confirmation screen displayed as ACT82 is updated. Note that, as the update timing, for example, it is assumed that the elapsed time since the previous execution of ACT82 exceeds a predetermined time. As the update timing, for example, it is assumed that it is confirmed that the transaction data extracted as the target transaction data when the ACT82 is executed last time is updated. However, the update timing may be appropriately determined by the developer or the like of the transaction processing program PRA or the like.

When the store clerk wishes to change the extraction conditions for the transaction displayed on the status confirmation screen, a predetermined operation to instruct the change is performed. The processor 301 in the attendant terminal 300 changes the display in the display area AJA in response to the operation.

First Specific Example: If the status confirmation screen SCJ of FIG. 22 is displayed, and if the store clerk wants to change the setting item "number of display" to "10 minutes ago", the store clerk taps the radio button associated with " 10 minutes ago". In response to the operation, the processor 301 causes the tapped radio button to be in a valid state and causes the other radio buttons to be in an invalid state.

Second specific example: If the status confirmation screen SCJ in FIG. 22 is displayed, and if the store clerk wants to exclude "exit" and "stop" from the target for the setting item "status", the store clerk taps the check box associated with "exit" and "stop". In response to the operation, the processor 301 causes the check marks in the check boxes associated with "exit" and "stop" to be non-displayed. Note that, when the check box with the non-displayed check mark is tapped, the processor 301 displays the check mark in the check box.

Third Specific Example: If the status confirmation screen SCJ of FIG. 22 is displayed, and if the store clerk wants to narrow down (filter/limit) the transactions displayed in the display area AJB to the transactions that are targets of the smartphone POS process, the store clerk taps the check box for the "tablet" setting. In response to the operation, the processor 301 causes the check mark in the check box associated with the "tablet" setting to be non-displayed.

Fourth Specific Example: If the status confirmation screen SCJ of FIG. 22 is displayed, and if the store clerk wants to narrow down (filter/limit) the transactions displayed in the display area AJB to the transactions that are targets of the cart POS process, the store clerk taps the check box for the "smartphone" setting. In response to the operation, the processor 301 causes the check mark in the check box associated with the "smartphone" setting to be non-displayed.

Fifth specific example: If the status confirmation screen SCJ of FIG. 22 is displayed, and if the store clerk wants to narrow down (filter/limit) the transactions displayed in the display area AJB to the transactions using a terminal of which the first digit in the terminal code is "3", the store clerk enters "3" in the input field for the "terminal ID" setting. In response to the operation, the processor 301 displays "3" in the relevant input field.

The store clerk instructs to update the conditions by a predetermined operation such as tapping the button BJA in a state where the display in the display area AJA matches the desired conditions. In response to the operation, the processor 301 transmits the notification data for notifying the settings displayed in the display area AJB at that time from the wireless communication unit 306 to the communication network 2 addressed to the transaction processing device 100.

When it is notified that the notification data transmitted from the attendant terminal 300 is received to notify the setting as described above, the processor 101 of the transaction processing device 100 determines YES in ACT84 in FIG. 21 and proceeds to ACT86.

As ACT86, the processor 101 changes the extraction conditions for the target transaction data in response to the notification. Then, the processor 101 repeats ACT81 and subsequent ACTs in the same manner as described above. Here, the processor 101 re-extracts the target transaction data under the changed extraction conditions and, after that, instructs the attendant terminal 300 to display a new status confirmation screen based on the re-extracted target transaction data.

Herein, the setting item "terminal ID" included in the notification data indicates the content of the designation of at least one of a "smartphone" as a first terminal type or a "tablet" as a second terminal type. Thus, the processor 101 accepts the designation in changing the extraction conditions based on the notification data. As a result of the processor 101 executing the information processing based on the transaction processing program PRA, the processor 101 functions as the reception unit.

When the key is included in the notification data, the processor 101 acquires the key in changing the extraction conditions based on the notification data. As a result of the processor 101 executing the information processing based on the transaction processing program PRA, the processor 101 functions as the acquisition unit.

FIG. 23 is a diagram illustrating a status confirmation screen SCK as an example.

The status confirmation screen SCK is an example after the extraction conditions are changed according to the second and third specific examples above.

By the change according to the second specific example, the processor 101 excludes the transaction data of which the status included in the management data set in the field FBD is "exit" or "stop" from the target transaction data among the transaction data extracted as the target transaction data in displaying the status confirmation screen SCJ of FIG. 22. In other words, although the transaction data related to the transaction with the transaction code of "11" is used as the target transaction data on the status confirmation screen SCJ, but since the "status" is "exit" and the terminal code is 1 digit, the processor 101 does not use the above transaction data as the target transaction data on the status confirmation screen SCK.

In addition, by the change according to the third specific example, the processor 101 excludes the transaction data in which the terminal code set in the field FBB identifies the cart terminal 500 from the target transaction data among the transaction data extracted as the target transaction data in displaying the status confirmation screen SCJ of FIG. 22. Note that the processor 101 extracts the transaction data in which the 32-digit terminal code is set in the field FBB as the target transaction data. In the present embodiment, since the terminal code of the user terminal 400 is 32 digits and the terminal code of the cart terminal 500 is 3 digits or less, for example, when the terminal code set in the field FBB is 4 or more digits, the processor 101 may determine that the 32-digit terminal code is set. In other words, although the transaction data related to the transactions with the transaction codes of "14" and "15" is used as the target transaction data on the status confirmation screen SCJ, but since the terminal code does not have 4 or more digits, the processor 101 does not use the above transaction data as the target transaction data on the status confirmation screen SCK.

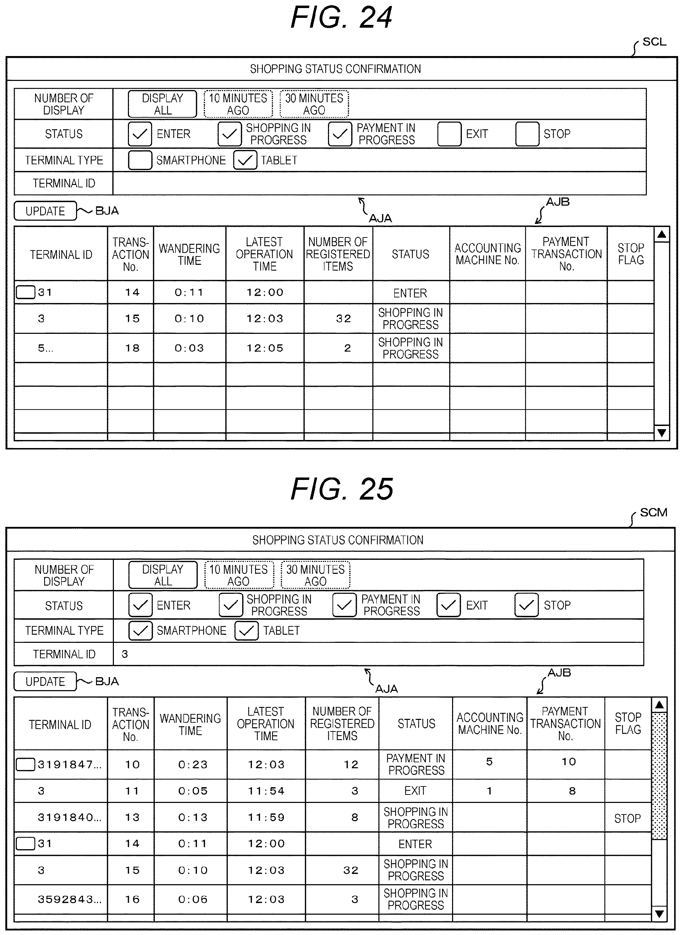

FIG. 24 is a diagram illustrating a status confirmation screen SCL as an example.

The status confirmation screen SCL is an example after changing the extraction conditions according to the second and fourth specific examples above.

By the change according to the second specific example, the processor 101 excludes the transaction data of which the status included in the management data set in the field FBD is "exit" or "stop" from the target transaction data among the transaction data extracted as the target transaction data in displaying the status confirmation screen SCJ of FIG. 22. In other words, although the transaction data related to the transaction with the transaction code of "11" is used as the target transaction data on the status confirmation screen SCJ, but the "status" is "exit" and the terminal code is 1 digit, the processor 101 does not use the above transaction data as the target transaction data on the status confirmation screen SCL.

By the change according to the fourth specific example, the processor 101 excludes the transaction data in which the terminal code set in the field FBB identifies the user terminal 400 from the target transaction data among the transaction data extracted as the target transaction data in displaying the status confirmation screen SCJ of FIG. 22. Note that the processor 101 extracts the transaction data in which the 1-digit to 3-digit terminal code is set in the field FBB as the target transaction data. In the present embodiment, for example, the processor 101 may determine that the 1-digit to 3-digit terminal code is set when the terminal code set in the field FBB is 3 digits or less. In other words, although the transaction data related to the transactions with the transaction codes of "10", "12", and "13" is used as the target transaction data on the status confirmation screen SCJ, but since the terminal code does not have 3 or less digits, the processor 101 does not use the above transaction data as the target transaction data on the status confirmation screen SCL.

FIG. 25 is a diagram illustrating a status confirmation screen SCM as an example.

The status confirmation screen SCM is an example after changing the extraction conditions according to the fifth specific example above.

By the change according to the fifth specific example, the processor 101 excludes the transaction data of which the upper 1 digit of the terminal code set in the field FBB is not "3" from the target transaction data among the transaction data extracted as the target transaction data in displaying the status confirmation screen SCJ of FIG. 22. In other words, although the transaction data related to the transaction with the transaction code of "12" is used as the target transaction data on the status confirmation screen SCJ, but since the upper 1 digit of the terminal code is not "3", the processor 101 does not use the above transaction data as the target transaction data on the status confirmation screen SCM.

As such, for the setting item "terminal type", when both "smartphone" and "tablet" as targets are set, the processor 101 narrows down according to forward matching on the terminal code described above.

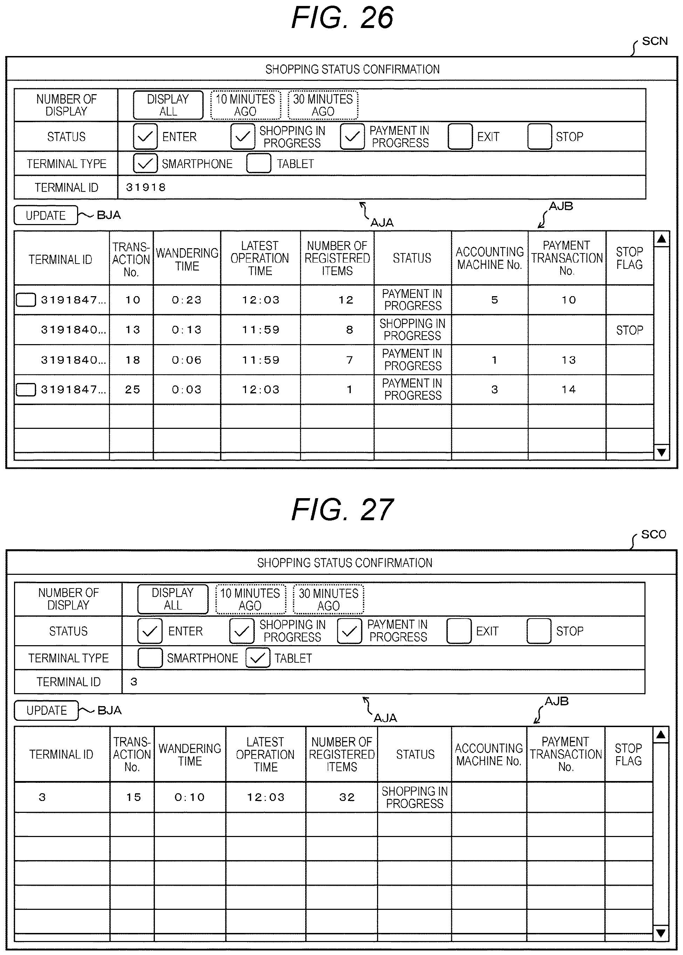

FIG. 26 is a diagram illustrating a status confirmation screen SCN as an example.

The status confirmation screen SCN is an example of the status confirmation screen SCK in FIG. 23 after the extraction condition is changed so that the key related to the setting item "terminal ID" is set to "31918".

The processor 101 excludes the transaction data of which the upper 5 digits of the terminal code set in the field FBB are not "31918" from the target transaction data among the transaction data extracted as the target transaction data in displaying the status confirmation screen SCK of FIG. 23. In other words, although the transaction data related to the transactions with the transaction codes of" 16" and "19" is used as the target transaction data on the status confirmation screen SCK, but since the upper five digits of the terminal code are not "31918", the processor 101 does not use the above transaction data as the target transaction data on the status confirmation screen SCN.

As such, for the setting item "terminal type", when only "smartphone" as a target is set, the processor 101 narrows down according to the forward matching on the terminal code.

FIG. 27 is a diagram illustrating a status confirmation screen SCO as an example.

The status confirmation screen SCO is an example of the status confirmation screen SCL in FIG. 24 after the extraction condition is changed so that the key related to the setting item "terminal ID" is set to "3".

The processor 101 excludes the transaction data in which the terminal code set in the field FBB is not "3" from the target transaction data among the transaction data extracted as the target transaction data in displaying the status confirmation screen SCL of FIG. 24. In other words, although the transaction data related to the transactions with the transaction codes of " 14" and " 18" is used as the target transaction data on the status confirmation screen SCL, but since the terminal code is not "3", the processor 101 does not use the above transaction data as the target transaction data on the status confirmation screen SCO.

As such, for the setting item "terminal type", when only "tablet" as a target is set, the processor 101 narrows down according to display all matching on the terminal code. Note that the display all matching is also called exact matching or all-digits matching.

Each shopping status screen narrows down the transactions to be processed by using the terminal devices belonging to the designated terminal type from among a plurality of the transactions processed by the transaction process and displays the information about the narrowed-down transactions on the touch panel 304 as the display device in the attendant terminal 300 under the instruction of the processor 101 of the transaction processing device 100. As a result of the processor 101 executing the information processing based on the transaction processing program PRA, the computer including the processor 101 functions as a narrowing-down unit and a display unit.

When any of other operations for changing the extraction conditions is performed in a state where the status confirmation screen is displayed on the touch panel 304, the processor 301 transmits the notification data for notifying the content of the operation from the wireless communication unit 306 to the communication network 2 addressed to the transaction processing device 100.

When the notification data transmitted from the attendant terminal 300 to notify the content of the operation is transmitted to the transaction processing device 100 via the communication network 2 as described above, the communication unit 104 of the transaction processing device 100 receives the relevant notification data. When receiving the notification data, the communication unit 104 notifies the processor 101.

Upon receiving the notification, the processor 101 determines YES in ACT85, confirms the content of the operation, and proceeds to the other processes for performing a process according to the operation. As one of the other processes, for example, the processor 101 instructs the attendant terminal 300 to display the screen illustrating the contents of the transaction, such as a list of transaction products related to the transaction in response to the operation to designate one of the transactions illustrated on the status confirmation screen. As one of the other processes, for example, the processor 101 updates the status confirmation screen in response to the operation to designate a column indicating headings in the display area AJB of the status confirmation screen to perform rearrangement by comparing the values of the items corresponding to the headings illustrated in the designated column related to the display order of each transaction in the display area AJB. As the other processes, another process or a plurality of processes may be selectively performed, but additional description thereof will be omitted.

Note that an update of the status confirmation screen for rearrangement may be performed by the processor 301.

As described above, the transaction processing device 100 provides the smartphone POS service performed by using the user terminal 400 as the user interface and the cart POS service performed by using the cart terminal 500 as the user interface in parallel. Then, the transaction processing device 100 can allow the attendant terminal 300 to display the execution status of the transaction by narrowing down the transaction by the smartphone POS service, like the status confirmation screen SCK illustrated in FIG. 23. Similarly to the status confirmation screen SCL illustrated in FIG. 24, the transaction processing device 100 can narrow down the transaction by the cart POS service and display the execution status of the transaction on the attendant terminal 300. Accordingly, it is possible to simplify the confirmation work of the execution status of each transaction in the status where the terminal devices of different types, such as the user terminal 400 and the cart terminal 500 are used for the plurality of transactions.

When the attendant terminal 300 is caused to display the status confirmation screen related to only the transaction that is a target of the smartphone POS service, in a case where the key is set, the transaction processing device 100 displays the status confirmation screen by narrowing down the transaction that is narrowed down according to the forward matching of the terminal code and the key like the status confirmation screen SCN illustrated in FIG. 26. Accordingly, the user can narrow down the transactions as display targets on the status confirmation screen without inputting all of a long terminal code of, for example, 32 digits.

When the attendant terminal 300 is caused to display the status confirmation screen related to only the transaction that is a target of the cart POS service, in a case where the key is set, the transaction processing device 100 displays the status confirmation screen by narrowing down the transaction that is narrowed down according to the display all matching of the terminal code and the key like the status confirmation screen SCO illustrated in FIG. 27. For example, in a case where the terminal codes "1" to "30" are set for the 30 cart terminals 500, when the key "1" is narrowed down by the forward matching, the terminal codes "1" and " 10" to "19" are narrowed down, and the transactions are narrowed down to only 11 transactions among a total of 30 transactions, but the transactions can be narrowed down to one transaction by using display all matching. Accordingly, the user can easily confirm the execution status of the transaction by using the desired cart terminal 500.

When the attendant terminal 300 is caused to display the status confirmation screen related to both the transaction that is a target of the smartphone POS service and the transaction that is a target of the cart POS service, in a case where the key is set, the transaction processing device 100 displays the status confirmation screen by narrowing down the transaction that is narrowed down according to the forward matching of the terminal code and the key like the status confirmation screen SCM illustrated in FIG. 25. Accordingly, the user can narrow down the transactions as display targets on the status confirmation screen without inputting all of a long terminal code of, for example, 32 digits.

The present embodiment can be performed as various modifications as follows.

In an embodiment, the transaction processing device 100 executes various processes for allowing the attendant terminal 300 to display the screen for confirming the execution status of a transaction, but the present disclosure is not limited thereto. For example, although the management of the transaction data DAA can be performed by the transaction processing device 100 similarly to the above-described embodiment, a portion or all of the processes of ACT81 to ACT86 in FIG. 21 may be executed by the attendant terminal 300 itself.

Instead of, or in addition to, the user terminal 400 and the cart terminal 500, an additional type of terminal device to be carried by the user may be provided by the store to the user as a user interface terminal. Here, the processor 101 may assume that this additional terminal device type is of the same type as one of the user terminal 400 or the cart terminal 500 or it may be assumed that the additional terminal device is a different type from the user terminal 400 and the cart terminal 500.

In narrowing-down based on the key of the transaction as a display target on the status confirmation screen, for the narrowing-down according to partial matching, the narrowing-down according to partial matching other than a forward matching process may be applied. The he method of narrowing down for each setting status related to the setting item "terminal type" can be freely changed.

In some examples, a portion of the processing performed by the processor 101 of the transaction processing device 100 in an embodiment may instead be performed by processors 401 and 501 in the user terminal 400 or the cart terminal 500. For example, the transaction data may be stored in the auxiliary storage unit 403 or 503, and the update may be performed by the processor 401 or 501.

In some cases, a function implemented by the processor 101 in the information processing may be partially or entirely implemented by dedicated hardware such as a logic circuit that executes the information processing not based on a software program. In some cases, each of the functions described above may be implemented by combining hardware such as a logic circuit described above with software control.

While certain embodiments have been described, these embodiments have been presented by way of example only, and are not intended to limit the scope of the present disclosure. Indeed, the novel embodiments described herein may be embodied in a variety of other forms; furthermore, various omissions, substitutions and changes in the form of the embodiments described herein may be made without departing from the framework of the disclosure. The accompanying claims and their equivalents are intended to cover such forms or modifications as would fall within the scope of the disclosure.

## Claims

1. A information processing device for a transaction processing system (1), the device comprising:
an input unit configured to receive a user designation of a first terminal type or a second terminal type;
a network interface configured to connect to a transaction server tracking a status of one or more sales transactions being performed by customers on a point-of-sale service terminal of the first terminal type or a point-of-sale service terminal of the second terminal type; and
a processor configured to:
filter sales transaction status information based on the user designation of the first terminal type or the second terminal type; and
cause a display device to display the sales transaction status information as filtered based on the user designation.

2. The information processing device according to claim 1, wherein the input unit includes a first button for designating the first terminal type and a second button for designating the second terminal type.

3. The information processing device according to claim 2, wherein the input unit further includes operator elements for filtering sales transaction status information by present status.

4. The information processing device according to claim 3, wherein the processor is further configured to filter the sales transaction status information based on the present status as indicated by the operator elements for filtering the sales transaction information by present status.

5. The information processing device according to any one of claims 2 to 4, wherein the input unit further includes a key number entry field for entry of a terminal identification number.

6. The information processing device according to claim 5, wherein the processor is further configured to filter the sales transaction status information based on the terminal identification number entered via the key number entry field.

7. The information processing device according to claim 5, wherein the processor is further configured to filter the sales transaction status information based on a partial terminal identification number entered via the key number entry field.

8. The information processing device according to any one of claims 1 to 7, wherein the input unit is a touch panel display screen.

9. The information processing device according to any one of claims 1 to 8, wherein the network interface is a wireless communication interface.

10. The information processing device according to any one of claims 1 to 9, wherein the point-of-sale service terminal of the first terminal type is a smartphone point-of-sale terminal and the point-of-sale service terminal of the second terminal type is a cart-based point-of-sale terminal.

11. A non-transitory, computer-readable medium storing program instructions which when executed by an attendant terminal causes the attendant terminal to perform a method comprising:
receiving a user designation of a first terminal type or a second terminal type via an input unit;
connecting to a transaction server tracking a status of one or more sales transactions being performed by customers on a point-of-sale service terminal of the first terminal type or a point-of-sale service terminal of the second terminal type;
filtering sales transaction status information based on the user designation of the first terminal type or the second terminal type; and
causing a display device to display the sales transaction status information as filtered based on the user designation.

12. The medium according to claim 11, wherein the input unit has a first button for designating the first terminal type and a second button for designating the second terminal type.

13. The medium according to claim 12, wherein the input unit further has operator elements for filtering sales transaction status information by present status.

14. The medium according to claim 13, the method further comprising filtering the sales transaction status information based on the present status as indicated by the operator elements for filtering the sales transaction information by present status.

15. A transaction processing system (1) comprising an attendant terminal, one or more point-of-sale service terminals of a first terminal type or a second terminal type and a transaction processing device (100) tracking a status of one or more sales transactions being performed by customers on the point-of-sale service terminals,
wherein the attendant terminal comprises
a display device; and
a network interface configured to connect to the transaction processing device and the point-of sale service terminals,
wherein the terminal processing device comprises a processor configured to
filter sales transaction status information based on the user designation of the first terminal type or the second terminal type; and
cause the display device to display the sales transaction status information as filtered based on the user designation.
